(19)

**Europäisches Patentamt**
**European Patent Office**
**Office européen des brevets**

(11) **EP 4 683 090 A1**

(12) **EUROPEAN PATENT APPLICATION**
published in accordance with Art. 153(4) EPC

(43) Date of publication:
**21.01.2026 Bulletin 2026/04**

(21) Application number: **24770787.0**

(22) Date of filing: **08.03.2024**

(51) International Patent Classification (IPC):
*H01M 50/443* (2021.01)    *H01M 4/13* (2010.01)
*H01M 4/139* (2010.01)    *H01M 10/052* (2010.01)
*H01M 10/0566* (2010.01)    *H01M 50/403* (2021.01)
*H01M 50/417* (2021.01)    *H01M 50/434* (2021.01)
*H01M 50/446* (2021.01)    *H01M 50/451* (2021.01)
*H01M 50/46* (2021.01)    *H01M 50/489* (2021.01)

(52) Cooperative Patent Classification (CPC):
**H01M 4/13; H01M 4/139; H01M 10/052;**
**H01M 10/0566; H01M 50/403; H01M 50/417;**
**H01M 50/434; H01M 50/443; H01M 50/446;**
**H01M 50/451; H01M 50/46; H01M 50/489**

(86) International application number:
**PCT/JP2024/009085**

(87) International publication number:
**WO 2024/190681 (19.09.2024 Gazette 2024/38)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **15.03.2023 JP 2023041412**

(71) Applicant: **Zeon Corporation**
**Tokyo 100-8246 (JP)**

(72) Inventors:
• **ITO, Yukie**
  **Tokyo 100-8246 (JP)**
• **TAKAHASHI, Naoki**
  **Tokyo 100-8246 (JP)**

(74) Representative: **Maiwald GmbH**
**Elisenhof**
**Elisenstraße 3**
**80335 München (DE)**

(54) **BINDER COMPOSITION FOR NONAQUEOUS SECONDARY BATTERY FUNCTIONAL LAYERS, SLURRY COMPOSITION FOR NONAQUEOUS SECONDARY BATTERY FUNCTIONAL LAYERS, SEPARATOR FOR NONAQUEOUS SECONDARY BATTERY, ELECTRODE FOR NONAQUEOUS SECONDARY BATTERY, AND NONAQUEOUS SECONDARY BATTERY**

(57)    Provided is a binder composition for a non-aqueous secondary battery functional layer that has excellent dispersion stability and is capable of forming a functional layer that can improve high-temperature storage characteristics of a secondary battery. The binder composition for a non-aqueous secondary battery functional layer contains a particulate polymer A, a particulate polymer B differing from the particulate polymer A, and a dispersion medium. A coating film obtained through application and drying of the binder composition for a non-aqueous secondary battery functional layer on a separator substrate made of polyethylene has an 86° glossiness of not less than 1 and not more than 70 and a 60° glossiness of less than 6.

EP 4 683 090 A1

## Description

TECHNICAL FIELD

The present disclosure relates to a binder composition for a non-aqueous secondary battery functional layer, a slurry composition for a non-aqueous secondary battery functional layer, a separator for a non-aqueous secondary battery, an electrode for a non-aqueous secondary battery, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged and are used in a wide variety of applications. A non-aqueous secondary battery typically includes battery members such as a positive electrode, a negative electrode, and a separator that isolates the positive electrode and the negative electrode from each other and prevents short circuiting therebetween.

Battery members including functional layers for imparting desired performance (for example, heat resistance or strength) on these battery members are used in secondary batteries. Specifically, a separator obtained by forming a functional layer on a separator substrate or an electrode obtained by forming a functional layer on an electrode substrate including an electrode mixed material layer on a current collector may, for example, be used as a battery member. Moreover, a functional layer that is composed of a porous membrane layer formed by binding non-conductive particles using a binder (binding material) may be used as a functional layer that can improve heat resistance, strength, or the like of a battery member. A functional layer such as described above is formed by, for example, applying a slurry composition (slurry composition for a functional layer) having components such as non-conductive particles, a composition containing a binder (binder composition for a functional layer), and so forth dissolved or dispersed in a solvent onto the surface of a substrate (separator substrate, electrode substrate, etc.), and then drying the applied slurry composition.

In recent years, much effort has been focused on improving binder compositions and slurry compositions used in the formation of functional layers with the aim of further increasing the performance of secondary batteries.

For example, Patent Literature (PTL) 1 proposes with respect to an electrochemical device slurry composition containing a particulate polymer having a specific core-shell structure, a binder, and heat-resistant fine particles, setting the electrolyte solution contact angle of the particulate polymer as not less than 0° and not more than 35° and setting the volume-average particle diameter of the particulate polymer as not less than 1.0 μm and not more than 10.0 μm. According to PTL 1, a functional layer that is obtained using this electrochemical device slurry composition can enhance electrolyte solution injectability and storage characteristics of an electrochemical device such as a lithium ion secondary battery and has excellent adhesiveness in a production process of an electrochemical device (process adhesiveness).

CITATION LIST

Patent Literature

PTL 1: WO2022/124126A1

SUMMARY

(Technical Problem)

It is desirable that a binder composition for a functional layer or a slurry composition for a functional layer inhibits aggregation and sedimentation of components in the composition (i.e., inhibits reduction of dispersion stability). However, the conventional technique described above leaves room for improvement in terms of inhibiting reduction of dispersion stability of a binder composition for a functional layer or a slurry composition for a functional layer.

In addition, it is generally desirable that a secondary battery including a functional layer obtained using a binder composition for a functional layer or a slurry composition for a functional layer has good battery characteristics such as high-temperature storage characteristics. However, the high-temperature storage characteristics of a secondary battery that includes a functional layer formed using a slurry composition for a functional layer of the conventional technique described above have not been adequate.

(Solution to Problem)

Accordingly, one object of the present disclosure is to provide a binder composition for a non-aqueous secondary battery functional layer that has excellent dispersion stability and is capable of forming a functional layer that can improve high-temperature storage characteristics of a secondary battery.

Another object of the present disclosure is to provide a slurry composition for a non-aqueous secondary battery functional layer that is capable of forming a functional layer that can improve high-temperature storage characteristics of a secondary battery.

Another object of the present disclosure is to provide a separator for a non-aqueous secondary battery and an electrode for a non-aqueous secondary battery that can improve high-temperature storage characteristics of a secondary battery.

Another object of the present disclosure is to provide a non-aqueous secondary battery that has excellent high-temperature storage characteristics.

The inventors conducted diligent investigation with the aim of solving the problems described above. The inventors made a new discovery that in a situation in which a binder composition for a non-aqueous secondary battery functional layer containing two types of particulate polymers and a dispersion medium is applied onto and dried on a specific separator substrate to obtain a coating film, so long as the 86° glossiness and the 60° glossiness of the coating film are within specific ranges, dispersion stability of the binder composition for a secondary battery functional layer is excellent, and a secondary battery including a functional layer formed using the binder composition for a non-aqueous secondary battery functional layer can be caused to display excellent high-temperature storage characteristics. In this manner, the inventors completed the present disclosure.

Specifically, with the aim of advantageously solving the problems set forth above, [1] a presently disclosed binder composition for a non-aqueous secondary battery functional layer comprises: a particulate polymer A; a particulate polymer B differing from the particulate polymer A; and a dispersion medium, wherein a coating film obtained through application and drying of the binder composition for a non-aqueous secondary battery functional layer on a separator substrate made of polyethylene has an 86° glossiness of not less than 1 and not more than 70 and a 60° glossiness of less than 6. When the 86° glossiness and the 60° glossiness of a coating film obtained through application and coating on a specific separator substrate are within the specific ranges set forth above in this manner, the binder composition for a secondary battery functional layer has excellent dispersion stability and can cause a secondary battery that includes a functional layer formed using the binder composition for a secondary battery functional layer to display excellent high-temperature storage characteristics.

Note that the 86° glossiness and the 60° glossiness of a coating film obtained through application and drying of a binder composition for a non-aqueous secondary battery functional layer on a separator substrate made of polyethylene referred to in the present disclosure can be measured by a method described in the EXAMPLES section.

[2] In the binder composition for a non-aqueous secondary battery functional layer according to the foregoing [1], it is preferable that a ratio of the 86° glossiness relative to the 60° glossiness of the coating film, expressed by 86° glossiness/60° glossiness, is not less than 1 and not more than 50. When the ratio of the 86° glossiness relative to the 60° glossiness of the coating film is within the specific range set forth above in this manner, dispersion stability of the binder composition for a non-aqueous secondary battery functional layer can be even further improved, and high-temperature storage characteristics of a secondary battery can be even further improved.

[3] In the binder composition for a non-aqueous secondary battery functional layer according to the foregoing [1] or [2], it is preferable that the dispersion medium is water and the binder composition for a non-aqueous secondary battery functional layer has a pH of higher than 7.5 and lower than 9.0. When the dispersion medium of the binder composition for a non-aqueous secondary battery functional layer is water and the pH of the binder composition for a non-aqueous secondary battery functional layer is higher than the lower limit set forth above in this manner, it is possible to increase stability in a situation in which the binder composition for a non-aqueous secondary battery functional layer or a slurry composition for a non-aqueous secondary battery functional layer produced using the binder composition for a non-aqueous secondary battery functional layer is applied onto a substrate. Moreover, when the pH of the binder composition is lower than the upper limit set forth above, adhesiveness of a functional layer before immersion in electrolyte solution (hereinafter, also referred to simply as "dry adhesiveness") and adhesiveness of a functional layer after immersion in electrolyte solution (hereinafter, also referred to simply as "wet adhesiveness") can be improved.

Note that the pH of a binder composition for a non-aqueous secondary battery functional layer can be measured by a method described in the EXAMPLES section.

[4] In the binder composition for a non-aqueous secondary battery functional layer according to any one of the foregoing [1] to [3], it is preferable that a mass ratio of the particulate polymer A and the particulate polymer B, expressed by particulate polymer A:particulate polymer B, is not less than 50:50 and not more than 95:5. When the mass ratio of the particulate polymer A and the particulate polymer B is within the specific range set forth above in this manner, dusting of a functional layer (shedding of particulate polymer) can be inhibited, dry adhesiveness and wet adhesiveness of the functional layer can be improved, and high-temperature storage characteristics of a secondary battery can also be even further improved.

[5] In the binder composition for a non-aqueous secondary battery functional layer according to any one of the foregoing [1] to [4], it is preferable that the particulate polymer A has a volume-average particle diameter D50 of not less than 0.5 μm and not more than 10 μm. When the volume-average particle diameter D50 of the particulate polymer A is within the specific range set forth above, dry adhesiveness and wet adhesiveness of a functional layer can be improved.

Note that the volume-average particle diameter D50 of a particulate polymer A referred to in the present disclosure can be measured by a method described in the EXAMPLES section.

[6] In the binder composition for a non-aqueous secondary battery functional layer according to any one of the foregoing [1] to [5], it is preferable that the particulate polymer A has a degree of swelling in electrolyte solution of not less than ×1 and not more than ×5. When the degree of swelling in electrolyte solution of the particulate polymer A is within the specific range set forth above in this manner, high-temperature storage characteristics of a secondary battery can be even further improved.

Note that the degree of swelling in electrolyte solution of a particulate polymer referred to in the present disclosure can be measured by a method described in the EXAMPLES section.

[7] In the binder composition for a non-aqueous secondary battery functional layer according to any one of the foregoing [1] to [6], it is preferable that the particulate polymer A includes an aromatic vinyl monomer unit in a proportion of 25 mass% or more. When the particulate polymer A includes an aromatic vinyl monomer unit in a proportion that is not less than the lower limit set forth above in this manner, elasticity of the particulate polymer A improves, strength of an obtained functional layer can be ensured, and, as a result, close adherence of the functional layer and a substrate (separator substrate or electrode substrate) can be increased.

Note that when a polymer is said to "include a monomer unit" in the present disclosure, this means that "a polymer obtained using that monomer includes a structural unit derived from the monomer". Also note that the proportion constituted by a monomer unit in a polymer referred to in the present disclosure can be measured by a nuclear magnetic resonance (NMR) method such as $^1$H-NMR.

Moreover, with the aim of advantageously solving the problems set forth above, [8] a presently disclosed slurry composition for a non-aqueous secondary battery functional layer comprises: the binder composition for a non-aqueous secondary battery functional layer according to any one of the foregoing [1] to [7]; and inorganic particles. A slurry composition for a non-aqueous secondary battery functional layer that contains any one of the binder compositions for a non-aqueous secondary battery functional layer set forth above and inorganic particles in this manner can form a functional layer that can improve high-temperature storage characteristics of a secondary battery. Moreover, by using this slurry composition, it is possible to improve heat resistance of a functional layer.

[9] In the slurry composition for a non-aqueous secondary battery functional layer according to the foregoing [8], it is preferable that the inorganic particles have a volume-average particle diameter D50 of not less than 0.1 μm and not more than 1.0 μm. When the volume-average particle diameter D50 of the inorganic particles is within the specific range set forth above in this manner, a secondary battery can be caused to display excellent battery characteristics (particularly output characteristics), and a battery member (separator or electrode) including a functional layer can be caused to sufficiently display heat shrinkage resistance even with a thin functional layer.

Note that the volume-average particle diameter D50 of inorganic particles referred to in the present disclosure can be measured by a method described in the EXAMPLES section in the same manner as the volume-average particle diameter D50 of a particulate polymer A.

Furthermore, with the aim of advantageously solving the problems set forth above, [10] a presently disclosed separator for a non-aqueous secondary battery comprises: a separator substrate; and a functional layer provided on at least one side of the separator substrate, wherein the functional layer is obtained using the binder composition for a non-aqueous secondary battery functional layer according to any one of the foregoing [1] to [7] or the slurry composition for a non-aqueous secondary battery functional layer according to the foregoing [8] or [9]. A separator for a non-aqueous secondary battery that includes a functional layer obtained using the binder composition for a non-aqueous secondary battery functional layer or the slurry composition for a non-aqueous secondary battery functional layer set forth above in this manner can cause a secondary battery to display excellent high-temperature storage characteristics.

Also, with the aim of advantageously solving the problems set forth above, [11] a presently disclosed electrode for a non-aqueous secondary battery comprises: an electrode substrate; and a functional layer provided on at least one side of the electrode substrate, wherein the functional layer is obtained using the binder composition for a non-aqueous secondary battery functional layer according to any one of the foregoing [1] to [7] or the slurry composition for a non-aqueous secondary battery functional layer according to the foregoing [8] or [9]. An electrode for a non-aqueous secondary battery that includes a functional layer obtained using the binder composition for a non-aqueous secondary battery functional layer or the slurry composition for a non-aqueous secondary battery functional layer set forth above in this manner can cause a secondary battery to display excellent high-temperature storage characteristics.

Moreover, with the aim of advantageously solving the problems set forth above, [12] a presently disclosed non-aqueous secondary battery comprises a positive electrode, a negative electrode, a separator, and an electrolyte solution, wherein the separator is the separator for a non-aqueous secondary battery according to the foregoing [10]. A non-aqueous secondary battery that includes the separator for a non-aqueous secondary battery set forth above in this manner has excellent high-temperature storage characteristics.

Furthermore, with the aim of advantageously solving the problems set forth above, [13] a presently disclosed non-aqueous secondary battery comprises a positive electrode, a negative electrode, a separator, and an electrolyte solution, wherein at least one of the positive electrode and the negative electrode is the electrode for a non-aqueous secondary battery according to the foregoing [11]. A non-aqueous secondary battery that includes the electrode for a non-aqueous secondary battery set forth above in this manner has excellent high-temperature storage characteristics.

(Advantageous Effect)

According to the present disclosure, it is possible to provide a binder composition for a non-aqueous secondary battery functional layer that has excellent dispersion stability and is capable of forming a functional layer that can improve high-temperature storage characteristics of a secondary battery.

Moreover, according to the present disclosure, it is possible to provide a slurry composition for a non-aqueous secondary battery functional layer that is capable of forming a functional layer that can improve high-temperature storage characteristics of a secondary battery.

Furthermore, according to the present disclosure, it is possible to provide a separator for a non-aqueous secondary battery and an electrode for a non-aqueous secondary battery that can improve high-temperature storage characteristics of a secondary battery.

Also, according to the present disclosure, it is possible to provide a non-aqueous secondary battery that has excellent high-temperature storage characteristics.

DETAILED DESCRIPTION

The following provides a detailed description of embodiments of the present disclosure.

The presently disclosed binder composition for a non-aqueous secondary battery functional layer (hereinafter, also referred to simply as a "binder composition") is a composition that is used in production of a non-aqueous secondary battery and can, for example, suitably be used in production of the presently disclosed slurry composition for a non-aqueous secondary battery functional layer. Moreover, the presently disclosed binder composition for a non-aqueous secondary battery functional layer can be used to form a functional layer having a function of adhering a separator substrate or an electrode substrate through application and drying thereof on a separator substrate or electrode substrate, for example. The presently disclosed slurry composition for a non-aqueous secondary battery functional layer (hereinafter, also referred to simply as a "slurry composition") can be used to form a functional layer having a function such as adhering or reinforcing a separator substrate or an electrode substrate through application and drying thereof on a separator substrate or electrode substrate, for example, and can suitably be used in production of the presently disclosed separator for a non-aqueous secondary battery (hereinafter, also referred to simply as a "separator") and the presently disclosed electrode for a non-aqueous secondary battery (hereinafter, also referred to simply as an "electrode"), for example. Moreover, the presently disclosed separator for a non-aqueous secondary battery and electrode for a non-aqueous secondary battery can suitably be used in production of the presently disclosed non-aqueous secondary battery (for example, a lithium ion secondary battery), for example.

Note that a "separator substrate" or an "electrode substrate" may also be referred to simply as a "substrate" in the present specification.

(Binder composition for non-aqueous secondary battery functional layer)

The presently disclosed binder composition contains a particulate polymer A, a particulate polymer B differing from the particulate polymer A, and a dispersion medium, and can optionally further contain other components.

A feature of the presently disclosed binder composition for a non-aqueous secondary battery functional layer is that a coating film obtained through application and drying of the binder composition for a non-aqueous secondary battery functional layer on a separator substrate made of polyethylene has an 86° glossiness of not less than 1 and not more than 70 and a 60° glossiness of less than 6. Consequently, the presently disclosed binder composition for a non-aqueous secondary battery functional layer has excellent dispersion stability and can be used to form a functional layer that can improve high-temperature storage characteristics of a secondary battery.

Note that the presently disclosed binder composition normally does not contain inorganic particles.

Although it is not necessarily certain why the 86° glossiness and the 60° glossiness of a coating film formed through application and drying of the presently disclosed binder composition for a non-aqueous secondary battery functional layer on a specific separator substrate being within specific ranges as described above results in improvement of dispersion stability of the binder composition and improvement of high-temperature storage characteristics of an obtained secondary battery, the reason for this is presumed to be as follows. Specifically, it is presumed that in a binder composition that yields a coating film having an 86° glossiness and a 60° glossiness that are within the specific ranges set forth above, an electric double layer is formed well in-between the particulate polymers A and B and the dispersion medium, thereby making it difficult for the particulate polymers A and B to aggregate and sediment. Moreover, it is also presumed that in the case of a binder composition that yields a coating film having an 86° glossiness and a 60° glossiness that are within the specific ranges set forth above, migration of the particulate polymer B in a functional layer formed using the binder composition is inhibited, and packability of the particulate polymers A and B in the functional layer is good, thereby inhibiting an increase of resistance of a secondary battery after high-temperature storage. More specifically, when a binder composition containing coarse polymer particles has fine polymer particles dispersed well therein, migration of the fine particles into a coating film obtained as described above is inhibited, and, as a result, an increase of glossiness of the surface of the coating film is inhibited due to fine polymer particles at the coating film surface. In the case of the presently disclosed binder composition, good dispersion of the particulate polymers A and B and high dispersion stability are presumed to inhibit migration of the fine particulate polymer B and maintain specific glossiness of an obtained coating film at a low level.

Note that the surface state of a measurement subject is known to have a greater influence on glossiness than color (T. IEE Japan, Vol. 113-C, No 11, '93 Investigation of Influence of Specimen Color on Glossiness, pp. 1013-1022). Therefore, the glossiness of a coating film is presumed to reflect the surface state (degree of packing of particulate polymer) of a coating film.

Furthermore, since the particulate polymer A in the presently disclosed binder composition has excellent adhesiveness as described further below, the presently disclosed binder composition can suitably be used as a binder composition for an adhesive layer or a binder composition for a porous membrane layer. Note that a functional layer that contains the particulate polymers A and B and inorganic particles is referred to as a "porous membrane layer" in the present specification, whereas a functional layer that contains the particulate polymers A and B but does not contain inorganic particles is referred to as an "adhesive layer" in the present specification.

<Particulate polymer A>

In a situation in which the binder composition for a non-aqueous secondary battery functional layer containing the particulate polymer A is used to provide a functional layer on a substrate such as a separator substrate or an electrode substrate, the particulate polymer A has a role of causing good adhesion to the substrate of the particulate polymer A itself and the particulate polymer B used in combination therewith. In other words, the particulate polymer A can cause a functional layer that is formed on a substrate to display good adhesiveness to the substrate.

Note that the particulate polymer A is a component that is dispersed in a state where it maintains a particulate form in the presently disclosed binder composition and slurry composition and that the particulate polymer A may have a particulate form or may have any other form in a functional layer that has been formed using the presently disclosed binder composition or slurry composition.

<<Properties>>

[Volume-average particle diameter D50]

The volume-average particle diameter D50 of the particulate polymer A is preferably 0.5 $\mu$m or more, and more preferably 1.0 $\mu$m or more, and is preferably 10 $\mu$m or less, more preferably 7.0 $\mu$m or less, and even more preferably 5.0 $\mu$m or less. When the volume-average particle diameter D50 of the particulate polymer A is not less than any of the lower limits set forth above, dry adhesiveness of a functional layer can be improved even in the case of a functional layer in which subsequently described inorganic particles are compounded, for example, because the particulate polymer A protrudes from the functional layer containing the inorganic particles. Moreover, when the volume-average particle diameter D50 of the particulate polymer A is not more than any of the upper limits set forth above, shedding of the particulate polymer A from a functional layer can be inhibited well, and dry adhesiveness and wet adhesiveness of the functional layer can be improved.

Note that the volume-average particle diameter D50 of the particulate polymer A can be adjusted to within a desired range through the polymerization method and polymerization conditions of the particulate polymer or through sedimentation separation, classification, or the like of the resultant polymer.

[Degree of swelling in electrolyte solution]

The degree of swelling in electrolyte solution of the particulate polymer A is preferably ×1 or more, and more preferably ×1.2 or more, and is preferably ×5 or less, more preferably ×4 or less, and even more preferably ×3 or less. When the degree of swelling in electrolyte solution of the particulate polymer A is not less than any of the lower limits set forth above, ion conductivity increases, and an increase of internal resistance can be inhibited in a secondary battery that includes a functional layer containing the particulate polymer A. As a result, an obtained secondary battery can be caused to display even better high-temperature storage characteristics. Moreover, when the degree of swelling in electrolyte solution of the particulate polymer A is not more than any of the upper limits set forth above, it is possible to inhibit the particulate polymer A contained in a functional layer from excessively swelling in electrolyte solution and blocking movement of lithium ions or the like, and thus it is possible to inhibit reduction of ion conductivity of the functional layer. As a result, an increase of resistance of a secondary battery is inhibited, and the secondary battery can be caused to display even better high-temperature storage characteristics.

The degree of swelling in electrolyte solution of the particulate polymer A can be controlled by altering the chemical composition of the particulate polymer A, for example.

[Glass-transition temperature]

The glass-transition temperature of the particulate polymer A is not specifically limited but is preferably 30°C or higher, and more preferably 40°C or higher, and is preferably 110°C or lower, and more preferably 90°C or lower. When the binder composition contains a particulate polymer A having a glass-transition temperature of 110°C or lower, a battery member (separator or electrode) that includes a functional layer formed using the binder composition can be caused to display a high level of dry adhesiveness, and it is also possible to cause good adhesion between a substrate and a functional layer and inhibit dusting of a formed functional layer. Moreover, when the glass-transition temperature of the particulate polymer A is 30°C or higher, blocking resistance of a battery member that includes a functional layer can be improved. "Blocking resistance" of a functional layer refers to an attribute of inhibiting unintended adhesion (blocking) at a timing at which the functional layer is in a stacked state with another member in a production process of a non-aqueous secondary battery, for example.

Note that the "glass-transition temperature" of a particulate polymer referred to in the present disclosure can be measured based on JIS K 7121(1987) using a differential scanning calorimeter.

The glass-transition temperature of the particulate polymer A can be controlled by altering the chemical composition of the particulate polymer, for example.

<<Chemical composition>>

A polymer having any chemical composition can be used as a constituent polymer of the particulate polymer A without any specific limitations so long as it can display adhesiveness.

With regards to polymers that may preferably be used as the particulate polymer A, a polymer that includes one or more types of monomer units selected from the group consisting of an aromatic vinyl monomer unit, a (meth)acrylic acid ester monomer unit, a nitrile group-containing monomer unit, an N-methylolamide group-containing monomer unit, an epoxy group-containing unsaturated monomer unit, a cross-linkable monomer unit, and an acidic group-containing monomer unit is preferable, a polymer that includes one or more types of monomer units selected from the group consisting of an aromatic vinyl monomer unit, a (meth)acrylic acid ester monomer unit, a cross-linkable monomer unit, and an epoxy group-containing unsaturated monomer unit is more preferable, and a polymer that includes each of an aromatic vinyl monomer unit, a (meth)acrylic acid ester monomer unit, a cross-linkable monomer unit, and an epoxy group-containing unsaturated monomer unit is even more preferable, for example.

[Aromatic vinyl monomer unit]

Examples of aromatic vinyl monomers that can form an aromatic vinyl monomer unit include, but are not specifically limited to, styrene, $\alpha$-methylstyrene, styrene sulfonic acid, butoxystyrene, and vinylnaphthalene, of which, styrene is preferable. One of these aromatic vinyl monomers may be used individually, or two or more of these aromatic vinyl monomers may be used in combination in a freely selected ratio.

The proportion constituted by aromatic vinyl monomer units in the particulate polymer A when all repeating units included in the particulate polymer A are taken to be 100 mass% is preferably 25 mass% or more, more preferably 30 mass% or more, and even more preferably 60 mass% or more, and is preferably 95 mass% or less, more preferably 90 mass% or less, and even more preferably 85 mass% or less. When the proportion constituted by aromatic vinyl monomer units in the particulate polymer A is not less than any of the lower limits set forth above, elasticity of the particulate polymer A improves, strength of an obtained functional layer can be ensured, and, as a result, close adherence of the functional layer and a substrate can be increased. Moreover, when the proportion constituted by aromatic vinyl monomer units in the particulate polymer A is not more than any of the upper limits set forth above, flexibility of the particulate polymer A increases, film formability during formation of a functional layer using the binder composition improves, and, as a result, close adherence of the functional layer and a substrate can be increased.

[(Meth)acrylic acid ester monomer unit]

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. One of these (meth)acrylic acid ester monomers may be used individually, or a plurality of these (meth)acrylic acid ester monomers may be used in combination. Of these (meth)acrylic acid ester monomers, n-butyl acrylate is preferable.

In the present disclosure, "(meth)acryl" is used to indicate "acryl" and/or "methacryl".

The proportion constituted by (meth)acrylic acid ester monomer units in the particulate polymer A when all repeating units included in the particulate polymer A are taken to be 100 mass% is preferably 3 mass% or more, more preferably 10 mass% or more, and even more preferably 20 mass% or more, and is preferably 40 mass% or less, and more preferably 30 mass% or less. When the proportion constituted by (meth)acrylic acid ester monomer units in the particulate polymer A is not less than any of the lower limits set forth above, dry adhesiveness of an obtained functional layer can be increased. Moreover, when the proportion constituted by (meth)acrylic acid ester monomer units in the particulate polymer A is not more than any of the upper limits set forth above, an increase of internal resistance of a secondary battery can be inhibited and high-temperature storage characteristics of the secondary battery can be even further enhanced as a result of the degree of swelling in electrolyte solution of the particulate polymer A being restricted from increasing excessively.

[Nitrile group-containing monomer unit]

Examples of nitrile group-containing monomers that can form a nitrile group-containing monomer unit include $\alpha,\beta$-ethylenically unsaturated nitrile monomers. Specifically, any $\alpha,\beta$-ethylenically unsaturated compound that has a nitrile group can be used as an $\alpha,\beta$-ethylenically unsaturated nitrile monomer without any specific limitations. Examples include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile. Of these nitrile group-containing monomers, acrylonitrile is preferable.

Note that one of these nitrile group-containing monomers may be used individually, or two or more of these nitrile group-containing monomers may be used in combination in a freely selected ratio.

The proportion constituted by nitrile group-containing monomer units in the particulate polymer A when all repeating units included in the particulate polymer A are taken to be 100 mass% is preferably 3 mass% or more, more preferably 4 mass% or more, and even more preferably 6 mass% or more, and is preferably 30 mass% or less, and more preferably 25 mass% or less. When the proportion constituted by nitrile group-containing monomer units in the particulate polymer A is not less than any of the lower limits set forth above, adhesiveness can be increased. Moreover, when the proportion constituted by nitrile group-containing monomer units in the particulate polymer A is not more than any of the upper limits set forth above, excessive swelling and blocking of movement of lithium ions or the like can be inhibited, and thus reduction of ion conductivity of a functional layer can be inhibited.

[N-Methylolamide group-containing monomer unit]

Examples of N-methylolamide group-containing monomers that can form an N-methylolamide group-containing monomer unit include N-methylol (meth)acrylamide and N-butoxymethylol (meth)acrylamide. Of these N-methylolamide group-containing monomers, N-methylolacrylamide is preferable. Note that one of these N-methylolamide group-containing monomers can be used individually, or a plurality of these N-methylolamide group-containing monomers can be used in combination.

[Epoxy group-containing unsaturated monomer unit]

Examples of epoxy group-containing unsaturated monomers that can form an epoxy group-containing unsaturated monomer unit include unsaturated glycidyl ethers such as vinyl glycidyl ether, allyl glycidyl ether, butenyl glycidyl ether, o-allylphenyl glycidyl ether, and glycidyl(2-butenyl) ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl 4-heptenoate, glycidyl sorbate, glycidyl linoleate, glycidyl 4-methyl-3-pentenoate, glycidyl ester of 3-cyclohexenecarboxylic acid, and glycidyl ester of 4-methyl-3-cyclohexenecarboxylic acid. From a viewpoint of even further enhancing high-temperature storage characteristics of an obtained secondary battery, it is preferable to use an unsaturated glycidyl ether and a glycidyl ester of an unsaturated carboxylic acid, more preferable to use allyl glycidyl ether, glycidyl(2-butenyl) ether, and glycidyl methacrylate, and even more preferable to use glycidyl methacrylate.

Note that one of these epoxy group-containing unsaturated monomers may be used individually, or two or more of these epoxy group-containing unsaturated monomers may be used in combination in a freely selected ratio.

The proportion constituted by epoxy group-containing unsaturated monomer units in the particulate polymer A when all repeating units included in the particulate polymer A are taken to be 100 mass% is preferably 1.0 mass% or more, more preferably 5.0 mass% or more, and even more preferably 10 mass% or more, and is preferably 20 mass% or less, and more preferably 15 mass% or less. When the proportion constituted by epoxy group-containing unsaturated monomer units in the particulate polymer A is not less than any of the lower limits set forth above, dry adhesiveness of an obtained functional layer can be improved.

[Cross-linkable monomer unit]

Examples of cross-linkable monomers that can form a cross-linkable monomer unit include polyfunctional monomers having two or more groups displaying polymerization reactivity in the monomer. Examples of polyfunctional monomers include divinyl compounds such as allyl methacrylate and divinylbenzene; di(meth)acrylic acid ester compounds such as diethylene glycol dimethacrylate, ethylene glycol dimethacrylate, diethylene glycol diacrylate, and 1,3-butylene glycol diacrylate; tri(meth)acrylic acid ester compounds such as trimethylolpropane trimethacrylate and trimethylolpropane triacrylate; and epoxy group-containing unsaturated monomers previously listed in the "Epoxy group-containing unsaturated monomer unit" section. Of these cross-linkable monomers, ethylene glycol dimethacrylate is preferable. Note that one of these cross-linkable monomers may be used individually, or two or more of these cross-linkable monomers may be used in combination in a freely selected ratio.

The proportion constituted by cross-linkable monomer units in the particulate polymer A when all repeating units included in the particulate polymer A are taken to be 100 mass% is preferably 0.1 mass% or more, more preferably 0.3 mass% or more, and even more preferably 0.5 mass% or more, and is preferably 1.0 mass% or less, and more preferably 0.8 mass% or less. When the proportion constituted by cross-linkable monomer units in the particulate polymer A is within any of the ranges set forth above, adhesiveness of an obtained functional layer can be improved.

[Acidic group-containing monomer unit]

Examples of acidic group-containing monomers that can form an acidic group-containing monomer unit include carboxy group-containing monomers, sulfo group-containing monomers, and phosphate group-containing monomers. One of these acidic group-containing monomers may be used individually, or a plurality of these acidic group-containing monomers may be used in combination.

Examples of carboxy group-containing monomers that can be used include ethylenically unsaturated monocarboxylic acids, derivatives of ethylenically unsaturated monocarboxylic acids, ethylenically unsaturated dicarboxylic acids, acid anhydrides of ethylenically unsaturated dicarboxylic acids, and derivatives of ethylenically unsaturated dicarboxylic acids and acid anhydrides thereof.

Examples of ethylenically unsaturated monocarboxylic acids include acrylic acid, methacrylic acid, and crotonic acid. Examples of derivatives of ethylenically unsaturated monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of ethylenically unsaturated dicarboxylic acids include maleic acid, fumaric acid, itaconic acid, and mesaconic acid. Examples of acid anhydrides of ethylenically unsaturated dicarboxylic acids include maleic anhydride, acrylic anhydride, methylmaleic anhydride, and dimethylmaleic anhydride. Examples of derivatives of ethylenically unsaturated dicarboxylic acids include methylmaleic acid, dimethylmaleic acid, phenylmaleic acid, chloromaleic acid, dichloromaleic acid, fluoromaleic acid, diphenyl maleate, nonyl maleate, decyl maleate, dodecyl maleate, octadecyl maleate, and fluoroalkyl maleates.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

In the present disclosure, "(meth)allyl" is used to indicate "allyl" and/or "methallyl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

Of these examples, carboxy group-containing monomers are preferable, and methacrylic acid is more preferable as an acidic group-containing monomer.

The proportion constituted by acidic group-containing monomer units in the particulate polymer A when all repeating units included in the particulate polymer A are taken to be 100 mass% is preferably 0.05 mass% or more, more preferably 0.1 mass% or more, and even more preferably 0.15 mass% or more, and is preferably 2 mass% or less, and more preferably 1 mass% or less. When the proportion constituted by acidic group-containing monomer units in the particulate polymer A is within any of the ranges set forth above, particles can be stabilized, and dispersion stability of the binder composition can be even further improved.

<<Production of particulate polymer A>>

The particulate polymer A can be produced through polymerization of a monomer composition containing the above-described monomers, carried out in an aqueous solvent such as water, for example. The proportion constituted by each monomer in the monomer composition is normally the same as the proportion constituted by each monomer unit in the particulate polymer A.

The method of polymerization is not specifically limited and can, for example, be a suspension polymerization method, an emulsion polymerization and aggregation method, a pulverization method, or the like, for example. Of these methods, a suspension polymerization method and an emulsion polymerization and aggregation method are preferable, and a suspension polymerization method is more preferable. Moreover, the polymerization reaction can be a reaction such as radical polymerization or living radical polymerization.

[Other compounding agents]

Other compounding agents such as chain transfer agents, polymerization regulators, polymerization reaction retardants, reactive fluidizers, fillers, flame retardants, antioxidants, and colorants can be compounded in any amount in the monomer composition that is used in production of the particulate polymer A.

The following describes a method of producing the particulate polymer A by suspension polymerization as one example.

[Production of particulate polymer by suspension polymerization]

(1) Production of monomer composition

First, a monomer composition (A) having a chemical composition corresponding to the chemical composition of the particulate polymer A is prepared. In this preparation, various monomers are compounded according to the chemical composition of the particulate polymer A, and other compounding agents that are added as necessary are further mixed therewith.

(2) Formation of droplets

Next, the monomer composition (A) is dispersed in water, a polymerization initiator is added, and then droplets of the monomer composition (A) are formed. No specific limitations are placed on the method by which the droplets are formed. For example, the droplets can be formed by using a disperser such as an emulsifying/dispersing device to perform shear stirring of the water containing the monomer composition (A).

The polymerization initiator that is used may be an oil-soluble polymerization initiator such as t-butyl peroxy-2-ethylhexanoate or azobisisobutyronitrile, for example. Note that the polymerization initiator may be added before droplet formation once the monomer composition (A) has been dispersed in water or may be added to the monomer composition (A) before dispersion thereof in water.

From a viewpoint of stabilizing droplets of the monomer composition (A) that are formed in the water, it is preferable that a dispersion stabilizer is added to the water and that droplets of the monomer composition (A) are then formed. The dispersion stabilizer can be an inorganic dispersion stabilizer such as an inorganic metal salt (for example, magnesium hydroxide, calcium hydroxide, or barium hydroxide) or an organic dispersion stabilizer such as sodium dodecylbenzenesulfonate. In particular, an inorganic dispersion stabilizer is preferable, and magnesium hydroxide is more preferable.

The dispersion stabilizer is preferably used in a dispersed state in an aqueous dispersion medium from a viewpoint of improving dispersion stability of droplets of the monomer composition (A) in the water. Water, a hydrophilic solvent such as an alcohol compound, or a mixture of water and a hydrophilic solvent can be used as the aqueous dispersion medium without any limitations.

Although a method of directly mixing the dispersion stabilizer and the aqueous medium may be adopted in production of a dispersion liquid of the dispersion stabilizer, for example, it is preferable that the dispersion stabilizer is obtained by mixing and thereby reacting two or more compounds (precursor compounds) that serve as precursors of the dispersion stabilizer in the aqueous medium.

Although no specific limitations are placed on the precursor compounds, in a situation in which an inorganic dispersion stabilizer such as a hydroxide salt (magnesium hydroxide, calcium hydroxide, barium hydroxide, etc.) having poor solubility in water is to be used as the dispersion stabilizer, a combination of a water-soluble polyvalent metal salt and an alkali metal hydroxide may be used as the two or more precursor compounds.

The water-soluble polyvalent metal salt may be a hydrochloric acid salt, a sulfuric acid salt, a nitric acid salt, or an acetic acid salt of a polyvalent metal such as magnesium, calcium, aluminum, iron, copper, manganese, nickel, or tin. Of these water-soluble polyvalent metal salts, a water-soluble salt of magnesium or calcium is preferable. Moreover, the alkali metal hydroxide may be sodium hydroxide, potassium hydroxide, lithium hydroxide, or the like. For example, in a situation in which magnesium hydroxide is to be used as the dispersion stabilizer, a combination of magnesium chloride and sodium hydroxide is preferable as the two or more precursor compounds.

Although no specific limitations are placed on the method by which the two or more precursor compounds are mixed in the aqueous medium, in a situation in which a combination of a water-soluble polyvalent metal salt and an alkali metal hydroxide is adopted, a method in which an aqueous medium solution of the alkali metal hydroxide is added dropwise to an aqueous medium solution of the water-soluble polyvalent metal salt under stirring is preferable.

The used amount of the water-soluble polyvalent metal salt is preferably 1 part by mass or more per 100 parts by mass of the monomer composition, and is preferably 30 parts by mass or less, and more preferably 20 parts by mass or less per 100 parts by mass of the monomer composition.

(3) Polymerization

Next, once droplets of the monomer composition (A) have been formed, the water containing the formed droplets is heated to initiate polymerization. The reaction temperature in the polymerization is preferably not lower than 50°C and not higher than 95°C. Moreover, the reaction time in the polymerization is preferably not less than 1 hour and not more than 10 hours, and is preferably 8 hours or less, and more preferably 6 hours or less.

(4) Washing, filtration, dehydration, and drying step

Once the polymerization has ended, the particulate polymer A can be obtained by subjecting the water containing the particulate polymer A to washing, filtration, and drying by standard methods, though it is preferable that the water dispersion containing the particulate polymer A is subjected to acid washing. Specifically, it is preferable that an acid is added to the water dispersion containing the particulate polymer A under stirring so as to adjust the pH of the water dispersion to a desired value, and that stirring is then further performed to wash the particulate polymer A. The acid used in the acid washing can be any acid such as hydrochloric acid, sulfuric acid, or nitric acid without any specific limitations, but is preferably sulfuric acid.

The pH of the water dispersion containing the particulate polymer A in the acid washing (end point pH of the acid washing) is preferably 7.0 or lower, more preferably 6.5 or lower, and even more preferably 5.5 or lower.

A lower end point pH of acid washing means that metal ions contained in the dispersion stabilizer can be efficiently removed and that side reactions can be inhibited during high-temperature storage of a secondary battery. As a result, high-temperature storage characteristics of the secondary battery can be even further improved.

The acid washing time of the particulate polymer A (time for which stirring is further performed after the pH of the water dispersion has been adjusted to a desired value) is preferably 0.5 hours or more, more preferably 1.0 hours or more, and even more preferably 5 hours or more.

A longer acid washing time means that metal ions contained in the dispersion stabilizer can be removed and that side reactions can be inhibited during high-temperature storage of a secondary battery. As a result, high-temperature storage characteristics of the secondary battery can be even further improved.

Water washing treatment (water washing, filtration, and dehydration) is preferably performed after the acid washing. Specifically, the water dispersion containing the particulate polymer A that has been acid washed as described above is filtered, deionized water is added to the resultant solid content to obtain a water dispersion of the particulate polymer A, and this water dispersion of the particulate polymer A is stirred for a specific time, filtered, and dehydrated.

The water washing treatment (water washing, filtration, and dehydration) is preferably performed repeatedly until the electrical conductivity of the water dispersion of the particulate polymer A is 1 mS/cm or less, and preferably 0.1 mS/cm or less.

Note that the electrical conductivity can be measured using a COND METER ES-71 produced by Horiba, Ltd., for example.

<Particulate polymer B>

The particulate polymer B is a component that in a functional layer formed using the binder composition containing the previously described particulate polymer A and this particulate polymer B, can bind components such as the particulate polymer A and inhibit shedding of components such as the particulate polymer A from the functional layer.

Note that the particulate polymer B is a component that is dispersed in a state where it maintains a particulate form in the presently disclosed binder composition or slurry composition and that the particulate polymer B may have a particulate form or may have any other form in a functional layer that has been formed using the presently disclosed binder composition or slurry composition.

<<Properties>>

[Volume-average particle diameter D50]

The volume-average particle diameter D50 of the particulate polymer B is preferably smaller than the volume-average particle diameter D50 of the particulate polymer A. The volume-average particle diameter D50 of the particulate polymer B is preferably 0.1 $\mu$m or more, and more preferably 0.2 $\mu$m or more, and is preferably 1.0 $\mu$m or less, and more preferably 0.5 $\mu$m or less. When the volume-average particle diameter D50 of the particulate polymer B is within any of the ranges set forth above, migration of the particulate polymer B during application of the binder composition can be inhibited well, good packing of the particulate polymers A and B in a functional layer is possible, and, as a result, high-temperature storage characteristics of a secondary battery can be even further improved.

The volume-average particle diameter D50 of the particulate polymer B can be measured by a method described in the EXAMPLES section. Moreover, the volume-average particle diameter D50 of the particulate polymer B can be controlled in the same way as the volume-average particle diameter D50 of the particulate polymer A.

[Glass-transition temperature]

The glass-transition temperature of the particulate polymer B is not specifically limited but is preferably -100°C or higher, more preferably -90°C or higher, and even more preferably -80°C or higher, and is preferably 30°C or lower, more preferably 20°C or lower, and even more preferably 15°C or lower.

When the glass-transition temperature of the particulate polymer B is within any of the ranges set forth above, dry adhesiveness of a functional layer can be increased while also even further enhancing high-temperature storage characteristics of a secondary battery.

The glass-transition temperature of the particulate polymer B can be measured in the same way as the glass-transition temperature of the particulate polymer A. Moreover, the glass-transition temperature of the particulate polymer B can be controlled by altering the chemical composition of the particulate polymer B, for example.

<<Chemical composition>>

No specific limitations are placed on a constituent polymer of the particulate polymer B so long as it is a different polymer to the previously described particulate polymer A. For example, a polymer that includes monomer units that can be included in the previously described particulate polymer A can be used.

Specifically, with regards to polymers that may preferably be used as the particulate polymer B, a polymer that includes one or more types of monomer units selected from the group consisting of an aromatic vinyl monomer unit, a (meth)acrylic acid ester monomer unit, a nitrile group-containing monomer unit, an N-methylolamide group-containing monomer unit, an epoxy group-containing unsaturated monomer unit, a cross-linkable monomer unit, and an acidic group-containing monomer unit is preferable, a polymer that includes at least a (meth)acrylic acid ester monomer unit is more preferable, and a polymer that includes each of a (meth)acrylic acid ester monomer unit, a nitrile group-containing monomer unit, a cross-linkable monomer unit, an acidic group-containing monomer unit, and an epoxy group-containing unsaturated monomer unit is even more preferable.

[Aromatic vinyl monomer unit]

Examples of aromatic monovinyl monomers that can form an aromatic monovinyl monomer unit include the same aromatic monovinyl monomers as the various monomers given as examples that can be used to form an aromatic monovinyl monomer unit that can be included in the particulate polymer A. Of these aromatic monovinyl monomers, styrene is preferable.

The proportion constituted by aromatic vinyl monomer units in the particulate polymer B when all repeating units included in the particulate polymer B are taken to be 100 mass% is preferably 10 mass% or more, and more preferably 20 mass% or more, and is preferably 90 mass% or less, more preferably 80 mass% or less, and even more preferably 70 mass% or less. When the proportion constituted by aromatic vinyl monomer units in the particulate polymer B is within any of the ranges set forth above, a balance of dry adhesiveness of a functional layer and high-temperature storage characteristics of a secondary battery can be achieved.

[(Meth)acrylic acid ester monomer unit]

Examples of (meth)acrylic acid ester monomers that can form a (meth)acrylic acid ester monomer unit include the same (meth)acrylic acid ester monomers as the various monomers given as examples that can be used to form a (meth) acrylic acid ester monomer unit that can be included in the particulate polymer A. Of these (meth)acrylic acid ester monomers, n-butyl acrylate is preferable.
The proportion constituted by (meth)acrylic acid ester monomer units in the particulate polymer B when all repeating units included in the particulate polymer B are taken to be 100 mass% is preferably 80 mass% or more, and more preferably 90 mass% or more, and is preferably 97 mass% or less, and more preferably 96 mass% or less. When the proportion constituted by (meth)acrylic acid ester monomer units in the particulate polymer B is within any of the ranges set forth above, binding capacity of the particulate polymer B can be increased.

[Nitrile group-containing monomer unit]

Examples of nitrile group-containing monomers that can form a nitrile group-containing monomer unit include the same nitrile group-containing monomers as the various monomers given as examples that can be used to form a nitrile group-containing monomer unit that can be included in the particulate polymer A. Of these nitrile group-containing monomers, acrylonitrile is preferable.
The proportion constituted by nitrile group-containing monomer units in the particulate polymer B when all repeating units included in the particulate polymer B are taken to be 100 mass% is preferably 1 mass% or more, and more preferably 2 mass% or more, and is preferably 10 mass% or less, and more preferably 5 mass% or less. When the proportion constituted by nitrile group-containing monomer units in the particulate polymer B is within any of the ranges set forth above, high-temperature storage characteristics of a secondary battery can be even further enhanced.

[N-Methylolamide group-containing monomer unit]

Examples of N-methylolamide group-containing monomers that can form an N-methylolamide group-containing monomer unit include the same N-methylolamide group-containing monomers as the various monomers given as examples that can be used to form an N-methylolamide group-containing monomer unit that can be included in the particulate polymer A. Of these N-methylolamide group-containing monomers, N-methylolacrylamide is preferable.
The proportion constituted by N-methylolamide group-containing monomer units in the particulate polymer B when all repeating units included in the particulate polymer B are taken to be 100 mass% is preferably 0.1 mass% or more, more preferably 0.5 mass% or more, and even more preferably 1.0 mass% or more, and is preferably 3.0 mass% or less, and more preferably 2.5 mass% or less. When the proportion constituted by N-methylolamide group-containing monomer units in the particulate polymer B is within any of the ranges set forth above, dispersion stability of the binder composition can be even further increased while also increasing binding capacity of the particulate polymer B.

[Epoxy group-containing unsaturated monomer unit]

Examples of epoxy group-containing unsaturated monomers that can form an epoxy group-containing unsaturated monomer unit include the same epoxy group-containing unsaturated monomers as the various monomers given as examples that can be used to form an epoxy group-containing unsaturated monomer unit that can be included in the particulate polymer A. Of these epoxy group-containing unsaturated monomers, glycidyl methacrylate is preferable.
The proportion constituted by epoxy group-containing unsaturated monomer units in the particulate polymer B when all repeating units included in the particulate polymer B are taken to be 100 mass% is preferably 0.5 mass% or more, and more preferably 1 mass% or more, and is preferably 5 mass% or less, and more preferably 3 mass% or less. When the proportion constituted by epoxy group-containing unsaturated monomer units in the particulate polymer B is within any of the ranges set forth above, binding capacity of the particulate polymer B can be increased.

[Cross-linkable monomer unit]

Examples of cross-linkable monomers that can form a cross-linkable monomer unit include the same cross-linkable monomers as the various monomers given as examples that can be used to form a cross-linkable monomer unit that can be included in the particulate polymer A. Of these cross-linkable monomers, allyl methacrylate is preferable.

The proportion constituted by cross-linkable monomer units in the particulate polymer B when all repeating units included in the particulate polymer B are taken to be 100 mass% is preferably 0.5 mass% or more, and more preferably 1 mass% or more, and is preferably 2.0 mass% or less, and more preferably 1.5 mass% or less. When the proportion constituted by cross-linkable monomer units in the particulate polymer B is within any of the ranges set forth above, dispersion stability of the binder composition can be even further increased while also increasing binding capacity of the particulate polymer B.

[Acidic group-containing monomer unit]

Examples of acidic group-containing monomers that can form an acidic group-containing monomer unit include the same acidic group-containing monomers as the various monomers given as examples that can be used to form an acidic group-containing monomer unit that can be included in the particulate polymer A. Of these acidic group-containing monomers, carboxy group-containing monomers are preferable from a viewpoint of even further improving dispersion stability of the binder composition and high-temperature storage characteristics of a secondary battery, and methacrylic acid is more preferable.

The proportion constituted by acidic group-containing monomer units in the particulate polymer B when all repeating units included in the particulate polymer B are taken to be 100 mass% is preferably 1.0 mass% or more, and more preferably 2.0 mass% or more, and is preferably 5.0 mass% or less, and more preferably 4.0 mass% or less. When the proportion constituted by acidic group-containing monomer units in the particulate polymer B is within any of the ranges set forth above, dispersion stability of the binder composition and high-temperature storage characteristics of a secondary battery can be even further improved.

<<Production method of particulate polymer B>>

The particulate polymer B can be produced in the same manner as the previously described particulate polymer A but is not specifically limited to being produced in that manner.

<Dispersion medium>

Water is normally used as the dispersion medium that is contained in the presently disclosed binder composition. Note that a mixture of water and an organic solvent can also be used as the dispersion medium. Examples of the organic solvent include, but are not specifically limited to, alicyclic hydrocarbon compounds such as cyclopentane and cyclohexane; aromatic hydrocarbon compounds such as toluene and xylene; ketone compounds such as ethyl methyl ketone and cyclohexanone; ester compounds such as ethyl acetate, butyl acetate, $\gamma$-butyrolactone, and $\varepsilon$-caprolactone; nitrile compounds such as acetonitrile and propionitrile; ether compounds such as tetrahydrofuran and ethylene glycol diethyl ether; alcohol compounds such as methanol, ethanol, isopropanol, ethylene glycol, and ethylene glycol monomethyl ether; and amide compounds such as N-methylpyrrolidone (NMP) and N,N-dimethylformamide. One of these organic solvents may be used individually, or two or more of these organic solvents may be used in combination in a freely selected ratio.

Note that the proportion constituted by water in the mixture of water and the organic solvent is normally 50 mass% or more, preferably 80 mass% or more, more preferably 90 mass% or more, and even more preferably 95 mass% or more.

The amount of the dispersion medium in the binder composition is preferably set such that the solid content concentration of the binder composition is within a desired range. Specifically, the solid content concentration of the binder composition is preferably 10 mass% or more, more preferably 15 mass% or more, and even more preferably 20 mass% or more, and is preferably 80 mass% or less, more preferably 75 mass% or less, even more preferably 70 mass% or less, and particularly preferably 65 mass% or less.

<Other components>

No specific limitations are placed on other components that can optionally be contained in the binder composition so long as they do not have an excessively undesirable influence on battery reactions in a secondary battery that includes a functional layer. Moreover, one type of other component may be used, or two or more types of other components may be used.

Examples of other components include preservatives, emulsifiers, dispersants, wetting agents, leveling agents, electrolyte solution decomposition inhibitors, and water-soluble polymers. Note that when a polymer is said to be "water-soluble" in the present disclosure, this means that when 0.5 g of the substance is dissolved in 100 g of water at 25°C, insoluble content is less than 1.0 mass%. Also note that in the case of a substance for which the solubility thereof varies depending on the pH of water, the polymer is considered to be "water-soluble" so long as there is at least one pH at which the substance satisfies the definition of "water-soluble" set forth above. A natural polymer, a semi-synthetic polymer, or a synthetic polymer, for example, can be used as a water-soluble polymer.

<Glossiness>

As previously described, a coating film obtained through application and drying of the presently disclosed binder composition on a separator substrate made of polyethylene is required to have an 86° glossiness of not less than 1 and not more than 70 and a 60° glossiness of less than 6.

In a situation in which the 86° glossiness and the 60° glossiness of the coating film are outside of the ranges set forth above, there is deterioration of dispersion stability of the binder composition and high-temperature storage characteristics of a secondary battery that includes an obtained functional layer.

From a viewpoint of even further improving dispersion stability of the binder composition while also even further improving high-temperature storage characteristics of a secondary battery, the 86° glossiness of the coating film is preferably 50 or less, and more preferably 30 or less. Moreover, from the same viewpoint, the 60° glossiness of the coating film is preferably 5 or less, and more preferably 4.5 or less. Although no specific limitations are placed on the lower limit for the 60° glossiness of the coating film, the 60° glossiness is preferably 1 or more, and more preferably 1.5 or more.

The 86° glossiness and the 60° glossiness of the coating film can be controlled by adjusting the chemical composition of the particulate polymer A and/or the particulate polymer B; the mass ratio of the particulate polymer A and the particulate polymer B in the binder composition; the amount of a water-soluble polyvalent metal salt that is used in production of a dispersion stabilizer used in production of the particulate polymer A by suspension polymerization; the acid washing time of the particulate polymers A and B; the end point pH of a water dispersion in acid washing of the particulate polymers A and B; the pH of the binder composition; and the volume-average particle diameter D50 of the particulate polymers A and B, for example.

From a viewpoint of even further improving dispersion stability of the binder composition while also even further improving high-temperature storage characteristics of a secondary battery, a ratio of the 86° glossiness relative to the 60° glossiness of the coating film (86° glossiness/60° glossiness) is preferably 1 or more, and is preferably 50 or less, more preferably 20 or less, and even more preferably 10 or less.

<Ratio of particulate polymers A and B in binder composition>

A mass ratio of the particulate polymer A and the particulate polymer B in the binder composition (particulate polymer A:particulate polymer B) is preferably not less than 50:50 and not more than 95:5, more preferably not less than 60:40 and not more than 95:5, and even more preferably not less than 70:30 and not more than 95:5. When the mass ratio of the particulate polymer A and the particulate polymer B in the binder composition is within any of the ranges set forth above, dusting of a functional layer can be inhibited, dry adhesiveness and wet adhesiveness of the functional layer can be improved, and high-temperature storage characteristics of a secondary battery can also be even further improved. Moreover, when the mass ratio of the particulate polymer A and the particulate polymer B is within any of the ranges set forth above, the glossiness of the coating film can be controlled to within an appropriate range.

<Content of particulate polymers A and B in binder composition>

The total content of the particulate polymers A and B in the binder composition is not specifically limited but is preferably 75 mass% or more, more preferably 80 mass% or more, and even more preferably 90 mass% or more relative to all solid content in the binder composition.

<pH of binder composition>

In a case in which the dispersion medium of the binder composition is water, the pH of the binder composition is preferably higher than 7.5, and is preferably lower than 10.0, more preferably lower than 9.0, and even more preferably 8.5 or lower. When the pH of the binder composition is within any of the ranges set forth above, migration of the particulate polymer B can be inhibited during application of the binder composition or slurry composition onto a substrate, and high-temperature storage characteristics of a secondary battery can be even further improved. Moreover, when the pH of the binder composition is higher than the lower limit set forth above, this can increase stability during application of the binder composition or slurry composition onto a substrate. Furthermore, when the pH of the binder composition is lower than any of the upper limits set forth above, this can improve dry adhesiveness and wet adhesiveness of a functional layer.

The pH of the binder composition can be controlled as appropriate by adding an acid such as hydrochloric acid or a base such as sodium hydroxide to the binder composition.

<Production method of binder composition>

The presently disclosed binder composition for a non-aqueous secondary battery functional layer can be produced by stirring and mixing the particulate polymer A, the particulate polymer B, and other optional components described above in the presence of a dispersion medium such as water. Note that in a situation in which dispersion liquids of the particulate polymers A and B are used in production of the binder composition, liquid content in these dispersion liquids may be used as the dispersion medium of the binder composition. For example, the binder composition may be produced by using water in a water dispersion of the particulate polymer A after acid washing described above and/or water in a water dispersion of the particulate polymer B after acid washing described above as the dispersion medium.

The stirring can be performed by a known method without any specific limitations. Specifically, the binder composition can be produced by mixing the above-described components and the dispersion medium using a typical stirring vessel, ball mill, sand mill, bead mill, pigment disperser, ultrasonic disperser, grinding machine, homogenizer, planetary mixer, or FILMIX. Mixing of the components and the dispersion medium can normally be performed in a range of from room temperature to 80°C for 10 minutes to several hours.

(Slurry composition for non-aqueous secondary battery functional layer)

The presently disclosed slurry composition is a slurry that contains the presently disclosed binder composition set forth above and inorganic particles, that may further contain other optional components, and that has water or the like as a dispersion medium.

The presently disclosed slurry composition has excellent dispersion stability as a result of being produced using the presently disclosed binder composition. Specifically, the formation of aggregates through aggregation of the particulate polymers A and B and the inorganic particles is inhibited in the presently disclosed slurry composition. Consequently, the presently disclosed slurry composition can be used to form a functional layer that can improve high-temperature storage characteristics of a secondary battery.

Moreover, the obtained functional layer has excellent adhesiveness as a result of the presently disclosed slurry composition containing the particulate polymers A and B described above. Furthermore, the obtained functional layer has excellent heat resistance and/or strength as a result of the presently disclosed slurry composition containing the inorganic particles.

<Binder composition>

The presently disclosed binder composition set forth above is used as the binder composition. No specific limitations are placed on the amount of the binder composition that is compounded in the slurry composition. The amount of the binder composition can be set as an amount such that, in terms of solid content, the amount of the particulate polymers A and B originating from the binder composition is not less than 10 parts by mass and not more than 200 parts by mass per 100 parts by mass of the inorganic particles.

<Inorganic particles>

The inorganic particles that are contained in the presently disclosed slurry composition are a material that can impart strength and heat resistance to an obtained functional layer. In other words, the inclusion of inorganic particles in the slurry composition means that an obtained functional layer can have both adhesiveness due to the particulate polymers A and B and strength and heat resistance due to the inorganic particles.

The material of the inorganic particles is preferably an electrochemically stable material that is stably present in the environment of use of a secondary battery. Examples of preferable materials of the inorganic particles from such viewpoints include particles of oxides such as aluminum oxide (alumina), hydrous aluminum oxide (boehmite (AlOOH)), gibbsite (Al(OH)$_3$), silicon oxide, magnesium oxide (magnesia), magnesium hydroxide, calcium oxide, titanium oxide (titania), barium titanate (BaTiO$_3$), ZrO, and alumina-silica composite oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clays such as talc, montmorillonite, kaolin, and calcined kaolin. In particular, it is preferable that the inorganic particles include alumina, and more preferable that the inorganic particles are alumina. Moreover, these particles may be subjected to element substitution, surface treatment, solid solution treatment, or the like as necessary.

Note that one of these types of inorganic particles may be used individually, or two or more of these types of inorganic particles may be used in combination in a freely selected ratio.

The volume-average particle diameter D50 of the inorganic particles is preferably 0.1 μm or more, more preferably 0.2 μm or more, and even more preferably 0.7 μm or more, and is preferably 1 μm or less, and more preferably 0.9 μm or less. When the volume-average particle diameter D50 of the inorganic particles is not less than any of the lower limits set forth above, reduction of ion conductivity of a functional layer due to dense packing of the inorganic particles in the functional layer can be inhibited, and battery characteristics (particularly output characteristics) of a secondary battery can be improved. Moreover, when the volume-average particle diameter D50 of the inorganic particles is not more than any of the upper limits set forth above, a battery member (separator or electrode) that includes a functional layer can be caused to sufficiently display heat shrinkage resistance even with a thin functional layer.

<Other components>

Examples of other components that can be compounded in the slurry composition include, but are not specifically limited to, the same other components as described above that can be compounded in the presently disclosed binder composition. One other component may be used individually, or two or more other components may be used in combination in a freely selected ratio.

<Production of slurry composition>

No specific limitations are placed on the method by which the slurry composition is produced. The presently disclosed slurry composition can be produced by mixing the binder composition, the inorganic particles, and other components that are used as necessary in the presence of a dispersion medium such as water. A dispersion medium such as water that was contained in the binder composition may be used in that form as the dispersion medium, or a new dispersion medium may be added. The mixing method used in production of the slurry composition is not specifically limited, and mixing may be performed using a typically used stirrer or disperser.

(Separator for non-aqueous secondary battery)

The presently disclosed separator for a non-aqueous secondary battery (hereinafter, also referred to simply as a "separator") includes a separator substrate and a functional layer provided on at least one side of the separator substrate.

<Separator substrate>

The separator substrate is not specifically limited and may be a known separator substrate such as an organic separator substrate. The organic separator substrate is a porous member that is made of an organic material and may, for example, be a microporous membrane or non-woven fabric that contains a polyolefin resin such as polyethylene or polypropylene, an aromatic polyamide resin, or the like. A microporous membrane or non-woven fabric made of polyethylene is preferable due to the excellent strength thereof.

<Functional layer>

The functional layer is a layer that is formed using the presently disclosed binder composition set forth above and that is preferably formed using the presently disclosed slurry composition set forth above. Specifically, the functional layer can be formed by, for example, applying the presently disclosed binder composition or slurry composition set forth above onto the surface of a separator substrate to form a coating film, and drying the coating film that has been formed. In other words, the functional layer is formed of a dried product of the presently disclosed binder composition or slurry composition set forth above.

In a case in which the functional layer is formed using the presently disclosed binder composition, the functional layer normally contains the previously described particulate polymers A and B and optionally further contains the previously described other components. Consequently, the functional layer can suitably function as an adhesive layer.

In a case in which the functional layer is formed using the presently disclosed slurry composition, the functional layer normally contains the previously described particulate polymers A and B and the previously described inorganic particles and optionally further contains the previously described other components. Consequently, the functional layer can function as a porous membrane layer that has excellent heat resistance and/or strength in addition to having excellent adhesiveness.

Note that the ratio in which each component (excluding a dispersion medium such as water) is contained in the functional layer is normally the same as the ratio in which each component is contained in the binder composition or slurry composition set forth above, and the preferred ratio of each component in the functional layer is also the same as the preferred ratio of each component in the binder composition or slurry composition set forth above.

In addition, the presently disclosed separator can cause a secondary battery to display excellent high-temperature storage characteristics as a result of the functional layer being formed from the presently disclosed binder composition or slurry composition.

<Production method of separator>

No specific limitations are placed on the method by which the presently disclosed separator is produced. For example, the presently disclosed separator can be produced by forming a functional layer on the separator substrate described above.

The method by which a functional layer is formed on the separator substrate to produce the presently disclosed separator may be any of the following methods, for example.

(1) A method in which the presently disclosed binder composition or slurry composition is supplied onto the surface of the separator substrate and is then dried

(2) A method in which the presently disclosed binder composition or slurry composition is supplied onto a releasable substrate and is dried to produce a functional layer that is then transferred onto the surface of the separator substrate

Of these methods, method (1) is particularly preferable since it allows simple control of the thickness of the functional layer. In more detail, method (1) includes a step of supplying the binder composition or slurry composition onto the separator substrate (supply step) and a step of drying the binder composition or slurry composition that has been applied onto the separator substrate to form a functional layer (drying step).

<<Supply step>>

The method by which the binder composition or slurry composition is supplied onto the separator substrate in the supply step may be a method in which the binder composition or slurry composition is applied onto the surface of the separator substrate or a method in which the separator substrate is immersed in the binder composition or slurry composition. Specific examples of these methods include, but are not specifically limited to, doctor blading, reverse roll coating, direct roll coating, gravure coating, extrusion coating, brush coating, dip coating, spray coating, and vacuum impregnation.

<<Drying step>>

The binder composition or slurry composition on the separator substrate can be dried by any commonly known method without any specific limitations in the drying step. Examples of drying methods that may be used include drying by warm, hot, or low-humidity air, drying in a vacuum, and drying through irradiation with infrared light, electron beams, or the like.

The thickness of the functional layer that is produced on the separator substrate in this manner is preferably not less than 0.1 $\mu$m and not more than 10 $\mu$m from a viewpoint of ensuring strength of the functional layer while also improving battery characteristics of a secondary battery.

(Electrode for non-aqueous secondary battery)

The presently disclosed electrode for a non-aqueous secondary battery (hereinafter, also referred to simply as an "electrode") includes an electrode substrate and a functional layer provided on at least one side of the electrode substrate.

<Electrode substrate>

The electrode substrate (positive electrode substrate or negative electrode substrate) is not specifically limited and may be an electrode substrate obtained by forming an electrode mixed material layer on a current collector.

The current collector, an electrode active material (positive electrode active material or negative electrode active material) and a binder for an electrode mixed material layer (binder for a positive electrode mixed material layer or binder for a negative electrode mixed material layer) in the electrode mixed material layer, and the method by which the electrode mixed material layer is formed on the current collector can be known examples thereof such as any of those described in JP2013-145763A or WO2015/129408A1, for example.

<Functional layer>

The functional layer is a layer that is formed using the presently disclosed binder composition set forth above and that is preferably formed using the presently disclosed slurry composition set forth above. Specifically, the functional layer can be formed by, for example, applying the presently disclosed binder composition or slurry composition set forth above onto the surface of the electrode substrate to form a coating film, and drying the coating film that has been formed. In other words, the functional layer is formed of a dried product of the presently disclosed binder composition or slurry composition set forth above.

Description of details of the functional layer is omitted here since these details are the same as previously described in the "Separator for non-aqueous secondary battery" section.

The presently disclosed electrode can cause a secondary battery to display excellent high-temperature storage characteristics as a result of the functional layer being formed from the presently disclosed binder composition or slurry composition.

<Production method of electrode>

No specific limitations are placed on the method by which the presently disclosed electrode is produced. For example, the presently disclosed electrode can be produced by forming a functional layer on the electrode substrate described above.

The method by which a functional layer is formed on the electrode substrate to produce the presently disclosed electrode may be any of the following methods, for example.

(1) A method in which the presently disclosed binder composition or slurry composition is supplied onto the surface of the electrode substrate (surface at the electrode mixed material layer-side; same applies below) and is then dried

(2) A method in which the presently disclosed binder composition or slurry composition is supplied onto a releasable substrate and is dried to produce a functional layer that is then transferred onto the surface of the electrode substrate

Of these methods, method (1) is particularly preferable since it allows simple control of the thickness of the functional layer. In more detail, method (1) includes a step of supplying the binder composition or slurry composition onto the electrode substrate (supply step) and a step of drying the binder composition or slurry composition that has been applied onto the electrode substrate to form a functional layer (drying step).

The supply step and the drying step can be the same as the supply step and the drying step that were previously described in the "Production method of separator" section. The thickness of the functional layer that is produced on the electrode substrate in this manner is preferably not less than 0.1 $\mu$m and not more than 10 $\mu$m from a viewpoint of ensuring strength of the functional layer while also improving battery characteristics of a secondary battery.

(Non-aqueous secondary battery)

The presently disclosed non-aqueous secondary battery includes at least a positive electrode, a negative electrode, a separator, and an electrolyte solution. In addition, the presently disclosed non-aqueous secondary battery satisfies either or both of the following requirements (I) and (II):

(I) the separator is the presently disclosed separator set forth above;

(II) at least one of the positive electrode and the negative electrode is the presently disclosed electrode set forth above.

<Separator>

The presently disclosed separator set forth above can be used as the separator. Note that a known separator other than the presently disclosed separator can be used as the separator in a case in which at least one of the positive electrode and the negative electrode is the presently disclosed electrode. The known separator other than the presently disclosed separator may be a separator formed of a separator substrate such as previously described in the "Separator for non-aqueous secondary battery" section.

<Electrodes>

The presently disclosed electrode set forth above can be used as the positive electrode and the negative electrode. Note that a known electrode other than the presently disclosed electrode can be used as the positive electrode or the negative electrode in a case in which the separator or the other electrode is the presently disclosed separator or the presently disclosed electrode. The known electrode other than the presently disclosed electrode may be an electrode formed of an electrode substrate such as previously described in the "Electrode for a non-aqueous secondary battery" section.

<Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution can be adjusted as appropriate. Furthermore, known additives may be added to the electrolyte solution.

(Production method of non-aqueous secondary battery)

The presently disclosed non-aqueous secondary battery set forth above can be produced by, for example, stacking the positive electrode and the negative electrode with the separator interposed therebetween, performing rolling, folding, or the like of the resultant stack, as necessary, to place the stack in a battery container, injecting the electrolyte solution into the battery container, and sealing the battery container. At least one member among the positive electrode, the negative electrode, and the separator is a functional layer-equipped member. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to measure or evaluate the volume-average particle diameter of a particulate polymer, the degree of swelling in electrolyte solution of a particulate polymer, the glossiness of a coating film, the pH of a water dispersion during acid washing and a binder composition, the dispersion stability of a binder composition, the amount of aggregates in a slurry composition, the dry adhesiveness of a functional layer, and the high-temperature storage characteristics of a secondary battery.

<Volume-average particle diameter D50 of particulate polymer A>

A water dispersion obtained by adding a dry particulate polymer A produced in each example or comparative example to 400 parts of deionized water to reform a slurry was taken as a measurement sample. The measurement sample was weighed out in an amount equivalent to 0.1 g (solid content), was taken into a beaker, and 0.1 mL of alkylbenzenesulfonic acid aqueous solution (DRIWEL produced by FUJIFILM Corporation) as a dispersant was added thereto. In addition, 10 mL to 30 mL of a diluent (ISOTON II produced by Beckman Coulter, Inc.) was added into the beaker, and 3 minutes of dispersing was performed by a 20 W (Watt) ultrasonic disperser. Thereafter, a particle size analyzer (Multisizer produced by Beckman Coulter, Inc.) was used to measure the volume-average particle diameter D50 by volume of the measurement sample under conditions of an aperture diameter of 20 $\mu$m, a medium of ISOTON II, and a measured particle count of 100,000.

<Volume-average particle diameter D50 of particulate polymer B>

The volume-average particle diameter D50 of a particulate polymer B produced in each example or comparative example was measured by laser diffraction. Specifically, a water dispersion (adjusted to solid content concentration of 0.1 mass%) containing a particulate polymer B produced in each example or comparative example was taken as a sample. A particle size distribution (by volume) was measured using a laser diffraction particle size analyzer (LS-230 produced by Beckman Coulter, Inc.), and the particle diameter D50 at which cumulative volume calculated from a small diameter end of this particle size distribution reached 50% was taken to be the volume-average particle diameter.

<Degree of swelling in electrolyte solution>

A dry particulate polymer A produced in each example or comparative example was taken as a measurement sample. Approximately 0.2 g of the sample was pressed at 200°C and 5 MPa for 2 minutes to obtain a film. The obtained film was cut to 1 cm-square to obtain a test specimen. The mass WO of this test specimen was measured.

The test specimen described above was immersed into electrolyte solution at 60°C for 72 hours. Thereafter, the test specimen was removed from the electrolyte solution, electrolyte solution on the surface of the test specimen was wiped off, and the mass W1 of the test specimen after the immersion test was measured. The measured masses WO and W1 were used to calculate the degree of swelling in electrolyte solution S ($\times$) by S = W1/WO. Note that a solution obtained by dissolving $LiPF_6$ as a supporting electrolyte with a concentration of 1 mol/L in a mixed solvent of ethylene carbonate (EC), diethyl carbonate (DEC), and vinylene carbonate (VC) (volume ratio: EC/DEC/VC = 68.5/30/1.5) was used as the electrolyte solution.

<Glossiness of coating film>

A binder composition produced in each example or comparative example was stirred at 2,000 rpm for 1 minute using a planetary mixer. The binder composition was applied onto a separator substrate (separator substrate made of polyethylene; produced by Asahi Kasei Corporation; product name: ND412; thickness: 12 $\mu$m) using a bar coater with an application rate of 50 mm/min and was then dried at 80°C. The 86° glossiness and 60° glossiness of the resultant coating film were measured in accordance with JIS Z 8741 using a gloss meter (MULTI GLOSS 268A produced by Konica Minolta, Inc.). In addition, a ratio of the 86° glossiness relative to the 60° glossiness was determined. The results are shown in Table 1. Note that the mass per unit area (mg/cm$^2$) of the coating film was as shown in Table 1.

<Dispersion stability of binder composition>

A binder composition produced in each example or comparative example was stirred at 2,000 rpm for 1 minute using a planetary mixer. An initial particle size distribution was measured by the method described in <Volume-average particle diameter D50 of particulate polymer A>. Next, 400 mL of the binder composition that had been stirred was loaded into a 500 mL vessel and was subjected to 30 minutes of centrifugal separation at a rotation speed equivalent to 9,000 G. With respect to the binder composition that had undergone centrifugal separation, a particle size distribution was measured by the method described in <Volume-average particle diameter D50 of particulate polymer A>. The change of volume-average particle diameter D50 between before and after centrifugal separation was determined according to the following formula. Dispersion stability was then evaluated according to the following standard. The results are shown in Table 1. A change of D50 that is close to 1 indicates excellent dispersion stability, whereas a change of D50 that is far from 1 indicates poor dispersion stability.

Change of D50 = D50 after centrifugal separation/D50 before centrifugal separation

A: Change of D50 of less than 2
B: Change of D50 of not less than 2 and less than 3
C: Change of D50 of not less than 3 and less than 4

D: Change of D50 of 4 or more

<pH>

The pH of a water dispersion during acid washing of a particulate polymer and the pH of a binder composition were measured using a benchtop pH meter "F-72S" produced by Horiba, Ltd. at normal temperature (25°).

<Adhesiveness before electrolyte solution immersion (dry adhesiveness)>

A negative electrode and a functional layer-equipped separator produced in each example or comparative example (functional layer-equipped negative electrode and separator in Example 2) were each cut out as 10 mm in width and 50 mm in length. The negative electrode and the separator were stacked and then pressed by a flat plate press with a temperature of 70°C and a load of 0.5 kN for 10 seconds to obtain a test specimen. The test specimen was placed with the surface at the current collector-side of the negative electrode facing downward, and cellophane tape was affixed to the surface of the negative electrode. Tape prescribed by JIS Z1522 was used as the cellophane tape. Moreover, the cellophane tape was fixed to a horizontal test stage in advance. The stress when one end of the separator was pulled vertically upward at a pulling speed of 50 mm/min to peel off the separator was measured. A total of three measurements of the stress were performed. An average value of the stress obtained through the total of three measurements was determined as the peel strength (N/m) and was evaluated by the following standard as the adhesiveness (dry adhesiveness) of the negative electrode and the separator via the functional layer. A larger peel strength indicates better dry adhesiveness.

A: Peel strength of 5.0 N/m or more
B: Peel strength of not less than 3.0 N/m and less than 5.0 N/m
C: Peel strength of not less than 1.0 N/m and less than 3.0 N/m
D: Peel strength of less than 1.0 N/m

<High-temperature storage characteristics>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, the lithium ion secondary battery was CC-CV charged (upper limit cell voltage 4.40 V) by a 0.2C constant-current method and CC discharged to 3.00 V by a 0.2C constant-current method. This charging and discharging at 0.2C was repeated three times.
Thereafter, charging was performed to a cell voltage of 4.40 by a 0.2C constant-current method in an environment having a temperature of 25°C, and this charging was then continued until the current value after reaching a cell voltage of 4.40 V was 0.02C. Next, the lithium ion secondary battery was detached from a charge/discharge controller and was stored at 60°C for 4 weeks. After storage, the lithium ion secondary battery was cooled to 25°C, was discharged to 3.0 V by a 0.2C constant-current method, and was subsequently charged until the state of charge reached 50% (i.e., until the charge capacity reached 400 mAh in the case of a cell capacity of 800 mAh). Measurement of voltage change was performed by the following procedure (1) to (3). Moreover, a resistance value after constant-temperature storage was determined by the following formula. A lower resistance value after constant-temperature storage indicates that the secondary battery has better high-temperature storage characteristics.

(1) Determine voltage change $\Delta V(0.2)$ upon 30 seconds of discharge by 0.2C constant-current method (I0.2)
(2) Charge for 30 seconds by 0.2C constant-current method
(3) Determine voltage change $\Delta V(1.0)$ upon 30 seconds of discharge by 1.0C constant-current method (I1.0)

$$\text{Resistance value } (\Omega) = \{\Delta V(1.0) - \Delta V(0.2)\}/(I1.0 - I0.2)$$

A: Resistance value after high-temperature storage test of less than 2.9 $\Omega$
B: Resistance value after high-temperature storage test of not less than 2.9 $\Omega$ and less than 3.1 $\Omega$
C: Resistance value after high-temperature storage test of not less than 3.1 $\Omega$ and less than 3.3 $\Omega$
D: Resistance value after high-temperature storage test of 3.3 $\Omega$ or more

(Example 1)

<Production of particulate polymer A>

[Production of monomer composition (A)]

A monomer composition (A) was produced by mixing 65 parts of styrene as an aromatic monovinyl monomer, 24.5 parts of n-butyl acrylate as a (meth)acrylic acid ester monomer, 0.5 parts of ethylene glycol dimethacrylate as a cross-linkable monomer, and 10 parts of glycidyl methacrylate as an epoxy group-containing unsaturated monomer.

[Production of metal hydroxide]

A colloidal dispersion liquid (A) containing magnesium hydroxide as a metal hydroxide was produced by gradually adding an aqueous solution (A2) of 7.0 parts of sodium hydroxide dissolved in 50 parts of deionized water to an aqueous solution (A1) of 10.0 parts of magnesium chloride dissolved in 200 parts of deionized water under stirring.

[Suspension polymerization]

A particulate polymer A was produced by suspension polymerization. Specifically, the monomer composition (A) obtained as described above was added to the colloidal dispersion liquid (A) containing magnesium hydroxide, was further stirred therewith, and then 3.0 parts of t-butyl peroxy-2-ethylhexanoate (PERBUTYL O produced by NOF Corporation) was added as a polymerization initiator to yield a mixture. The obtained mixture was subjected to 1 minute of high-shear stirring at a rotation speed of 12,000 rpm using an inline emulsifying/dispersing device (CAVITRON produced by Pacific Machinery & Engineering Co., Ltd.) so as to form droplets of the monomer composition (A) in the colloidal dispersion liquid containing magnesium hydroxide.

The magnesium hydroxide-containing colloidal dispersion liquid in which droplets of the monomer composition (A) had been formed was loaded into a reactor, was heated to 90°C, and was subjected to a polymerization reaction for 5 hours. The resultant dispersion liquid was subjected to 2 hours of reduced pressure treatment at 90°C using an evaporator to perform purification and yield a water dispersion containing a particulate polymer A.

In addition, the water dispersion containing the particulate polymer A was stirred while sulfuric acid was added dropwise at room temperature (25°C) until the pH reached 5.5, and then stirring was continued for 5 hours to perform acid washing. Next, separation was performed by filtration, a slurry was reformed through addition of 500 parts of deionized water to the resultant solid content, and water washing treatment (washing, filtration, and dehydration) was performed until the electrical conductivity reached 0.1 mS/cm or less. Thereafter, separation was performed by filtration to obtain solid content that was then loaded into a vessel of a dryer and was dried at 40°C for 48 hours to obtain a dried particulate polymer A.

The volume-average particle diameter and degree of swelling in electrolyte solution of the particulate polymer A were measured. The results are shown in Table 1.

<Production of particulate polymer B>

A reactor including a stirrer was supplied with 70 parts of deionized water, 0.15 parts of sodium lauryl sulfate (EMAL® 2F (EMAL is a registered trademark in Japan, other countries, or both) produced by Kao Corporation) as an emulsifier, and 0.5 parts of ammonium persulfate as a polymerization initiator. The gas phase was purged with nitrogen gas, and the temperature was raised to 60°C.

Meanwhile, a monomer composition (B) was produced in a separate vessel by mixing 50 parts of deionized water, 0.5 parts of sodium dodecylbenzenesulfonate as a dispersion stabilizer, 94 parts of n-butyl acrylate as a (meth)acrylic acid ester monomer, 2 parts of methacrylic acid as an acidic group-containing monomer, 2 parts of acrylonitrile as a nitrile group-containing monomer, 1 part of allyl methacrylate as a cross-linkable monomer, and 1 part of allyl glycidyl ether as an epoxy group-containing unsaturated monomer.

The obtained monomer composition (B) was continuously added into the above-described reactor including a stirrer over 4 hours to perform polymerization. The reaction was carried out at 60°C during the addition. Once the addition was complete, a further 3 hours of stirring was performed at 70°C, and then the reaction was ended to yield a water dispersion having a solid content concentration of 45 mass% that contained a particulate polymer B. The pH of the water dispersion containing the particulate polymer B was 3.8. The volume-average particle diameter of the particulate polymer B was measured. The result is shown in Table 1.

<Production of binder composition>

After adding together 80 parts by mass of the particulate polymer A and 0.5 parts of polyacrylic acid as a dispersant, further adding deionized water to adjust the solid content concentration to 20%, and then mixing 0.2 parts of sodium dodecylbenzenesulfonate (NEOPELEX G-15 produced by Kao Corporation) as an emulsifier and 1.5 parts of carboxymethyl cellulose as a water-soluble polymer such that the solid content concentration was 40%, 0.5 parts of 1,2-benzo-4-isothiazolin-3-one was added as a preservative. A ball mill was used to mix the resultant mixture. Next, the mixture containing the particulate polymer A was loaded into a vessel including a stirrer, 20 parts by mass in terms of solid content of the water dispersion containing the particulate polymer B was further added, and 1 hour of mixing was performed. Next, the pH was adjusted to 8.0 using a 4 mass% aqueous solution of sodium hydroxide, and then the solid content concentration was adjusted to 20 mass% using deionized water to yield a binder composition. This binder composition was used to measure dispersion stability and glossiness of a coating film. The results are shown in Table 1.

<Production of slurry composition>

Alumina (AKP3000 produced by Sumitomo Chemical Co., Ltd.; volume-average particle diameter: 0.7 $\mu$m) was added as inorganic particles in an amount of 300 parts to the above-described binder composition (100 parts by mass in terms of solid content) and was mixed therewith using a ball mill. Deionized water was further added to adjust the solid content concentration to 25 mass% and yield a slurry composition.

<Production of functional layer-equipped separator>

A separator substrate made of polyethylene (thickness: 12 $\mu$m) was prepared as a separator substrate. The slurry composition obtained as described above was applied onto one side of the separator substrate by bar coating. Next, the separator substrate with the slurry composition applied thereon was dried at 50°C for 1 minute to form a functional layer. The same operations were performed with respect to the other side of the separator substrate so as to produce a functional layer-equipped separator including functional layers, each of 2.0 $\mu$m in thickness, at both sides of the separator substrate.

<Production of positive electrode>

A slurry composition for a positive electrode was produced by mixing 100 parts of $LiCoO_2$ (volume-average particle diameter: 12 $\mu$m) as a positive electrode active material, 2 parts of acetylene black (HS-100 produced by Denka Company Limited) as a conductive material, 2 parts in terms of solid content of polyvinylidene fluoride (#7208 produced by Kureha Corporation) as a binder for a positive electrode mixed material layer, and N-methylpyrrolidone as a solvent, adjusting the total solid content concentration to 70%, and mixing these materials in a planetary mixer.
The slurry composition for a positive electrode was applied onto aluminum foil of 20 $\mu$m in thickness serving as a current collector by a comma coater such as to have a thickness after drying of approximately 150 $\mu$m. The applied slurry composition was dried by conveying the aluminum foil inside a 60°C oven for 2 minutes at a speed of 0.5 m/min. Thereafter, 2 minutes of heat treatment was performed at 120°C to obtain a pre-pressing positive electrode web. The pre-pressing positive electrode web was rolled by roll pressing to obtain a post-pressing positive electrode including a positive electrode mixed material layer (thickness: 60 $\mu$m).

<Production of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. The reaction was quenched by cooling at the point at which the polymerization conversion rate reached 96% to yield a mixture containing a binder (SBR) for a negative electrode mixed material layer. The mixture containing the binder for a negative electrode mixed material layer was adjusted to pH 8 through addition of 5% sodium hydroxide aqueous solution and was then subjected to thermal-vacuum distillation to remove unreacted monomer. Thereafter, the mixture was cooled to 30°C or lower to yield a water dispersion containing the desired binder for a negative electrode mixed material layer.
After compounding 80 parts of artificial graphite (volume-average particle diameter: 15.6 $\mu$m) as a negative electrode active material (1) and 16 parts of a silicon-based active material SiOx (volume-average particle diameter: 4.9 $\mu$m) as a negative electrode active material (2) and then mixing 2.5 parts in terms of solid content of a 2% aqueous solution of carboxymethyl cellulose sodium salt (MAC350HC produced by Nippon Paper Industries Co., Ltd.) as a viscosity modifier and deionized water therewith so as to adjust the solid content concentration to 68%, these materials were mixed at 25°C for 60 minutes. The solid content concentration was further adjusted to 62% with deionized water, and a further 15 minutes of mixing was performed at 25°C to yield a mixture. Deionized water and 1.5 parts in terms of solid content of the water dispersion containing the binder for a negative electrode mixed material layer described above were added to this mixture, the final solid content concentration was adjusted to 52%, and 10 minutes of mixing was performed to yield a mixture. The mixture was subjected to defoaming under reduced pressure to yield a slurry composition for a negative electrode having good fluidity.

The slurry composition for a negative electrode was applied onto copper foil of 20 $\mu$m in thickness serving as a current collector by a comma coater such as to have a thickness after drying of approximately 150 $\mu$m. The applied slurry composition was dried by conveying the copper foil inside a 60°C oven for 2 minutes at a speed of 0.5 m/min. Thereafter, 2 minutes of heat treatment was performed at 120°C to obtain a pre-pressing negative electrode web. The pre-pressing negative electrode web was rolled by roll pressing to obtain a post-pressing negative electrode including a negative electrode mixed material layer (thickness: 80 $\mu$m).

The functional layer-equipped separator and the negative electrode obtained as described above were used to evaluate dry adhesiveness of a functional layer. The result is shown in Table 1.

<Production of lithium ion secondary battery>

The post-pressing positive electrode produced as described above was cut out as a rectangle of 49 cm × 5 cm and was placed with the surface at the positive electrode mixed material layer-side facing upward. The functional layer-equipped separator was cut out as 120 cm × 5.5 cm and was arranged on this positive electrode mixed material layer such that the positive electrode was positioned at one longitudinal direction side of the functional layer-equipped separator. In addition, the post-pressing negative electrode produced as described above was cut out as a rectangle of 50 cm × 5.2 cm and was arranged on the functional layer-equipped separator such that the surface at the negative electrode mixed material layer-side faced toward the functional layer-equipped separator and the negative electrode was positioned at the other longitudinal direction side of the functional layer-equipped separator. The resultant laminate was wound by a roller to obtain a roll. This roll was pressed into a flattened form at 70°C and 1 MPa, was subsequently enclosed in an aluminum packing case serving as a battery case, and electrolyte solution (solvent: ethylene carbonate/diethyl carbonate/vinylene carbonate (volume ratio) = 68.5/30/1.5; electrolyte: LiPF$_6$ of 1 M in concentration) was injected such that no air remained. An opening of the aluminum packing case was heat sealed at a temperature of 150°C so as to close the aluminum packing case and produce a wound lithium ion secondary battery having a capacity of 800 mAh.

The obtained lithium ion secondary battery was used to evaluate high-temperature storage characteristics of the secondary battery. The result is shown in Table 1.

(Example 2)

Particulate polymers A and B, a binder composition, a slurry composition, a positive electrode, a negative electrode, and a lithium ion secondary battery were produced in the same way as in Example 1 and the same evaluations were made with the exception that in Example 1, the slurry composition was applied onto the negative electrode mixed material layer surface of the obtained negative electrode and was dried at 100°C for 1 minute to produce a negative electrode including a functional layer (functional layer-equipped negative electrode), and a separator that did not include a functional layer was used. The results are shown in Table 1.

(Example 3)

Particulate polymers A and B, a binder composition, a slurry composition, a positive electrode, a negative electrode, a functional layer-equipped separator, and a lithium ion secondary battery were produced in the same way as in Example 1 and the same evaluations were made with the exception that in Example 1, the pH of the water dispersion containing the particulate polymer A in acid washing of the particulate polymer A was changed to 6.0. The results are shown in Table 1.

(Example 4)

Particulate polymers A and B, a binder composition, a slurry composition, a positive electrode, a negative electrode, a functional layer-equipped separator, and a lithium ion secondary battery were produced in the same way as in Example 1 and the same evaluations were made with the exception that in Example 1, the pH of the water dispersion containing the particulate polymer A in acid washing of the particulate polymer A was changed to 6.5. The results are shown in Table 1.

(Example 5)

Particulate polymers A and B, a binder composition, a slurry composition, a positive electrode, a negative electrode, a functional layer-equipped separator, and a lithium ion secondary battery were produced in the same way as in Example 1 and the same evaluations were made with the exception that in Example 1, the pH of the binder composition was changed to 7.6. The results are shown in Table 1.

(Example 6)

Particulate polymers A and B, a binder composition, a slurry composition, a positive electrode, a negative electrode, a functional layer-equipped separator, and a lithium ion secondary battery were produced in the same way as in Example 1 and the same evaluations were made with the exception that in Example 1, the pH of the binder composition was changed to 8.8. The results are shown in Table 1.

(Example 7)

Particulate polymers A and B, a binder composition, a slurry composition, a positive electrode, a negative electrode, a functional layer-equipped separator, and a lithium ion secondary battery were produced in the same way as in Example 1 and the same evaluations were made with the exception that in Example 1, the amount of magnesium chloride used in production of the particulate polymer A was changed from 10.0 parts to 8.0 parts and the pH of the binder composition was changed to 8.8. The results are shown in Table 1.

(Example 8)

Particulate polymers A and B, a binder composition, a slurry composition, a positive electrode, a negative electrode, a functional layer-equipped separator, and a lithium ion secondary battery were produced in the same way as in Example 1 and the same evaluations were made with the exception that in Example 1, the additive amounts of monomers used in production of the particulate polymer A were changed as shown in Table 1. The results are shown in Table 1.

(Example 9)

Particulate polymers A and B, a binder composition, a slurry composition, a positive electrode, a negative electrode, a functional layer-equipped separator, and a lithium ion secondary battery were produced in the same way as in Example 1 and the same evaluations were made with the exception that in Example 1, the additive amounts of monomers used in production of the particulate polymer A were changed as shown in Table 1. The results are shown in Table 1.

(Examples 10 to 13)

Particulate polymers A and B, a binder composition, a slurry composition, a positive electrode, a negative electrode, a functional layer-equipped separator, and a lithium ion secondary battery were produced in the same way as in Example 1 and the same evaluations were made with the exception that in Example 1, the additive amounts of monomers used in production of the particulate polymer A were changed as shown in Table 1, acid washing was not performed, and the pH of the binder composition was changed to 9.9. The results are shown in Table 1.

(Comparative Example 1)

Particulate polymers A and B, a binder composition, a slurry composition, a positive electrode, a negative electrode, a functional layer-equipped separator, and a lithium ion secondary battery were produced in the same way as in Example 1 and the same evaluations were made with the exception that in Example 1, the pH of the water dispersion containing the particulate polymer A in acid washing of the particulate polymer A was changed to 6.5, and the acid washing time in production of the particulate polymer A was changed from 5 hours to 0.25 hours. The results are shown in Table 1.

(Comparative Example 2)

Particulate polymers A and B, a binder composition, a slurry composition, a positive electrode, a negative electrode, a functional layer-equipped separator, and a lithium ion secondary battery were produced in the same way as in Example 1 and the same evaluations were made with the exception that in Example 1, the pH of the binder composition was changed to 7.0. The results are shown in Table 1.

(Comparative Example 3)

Particulate polymers A and B, a binder composition, a slurry composition, a positive electrode, a negative electrode, a functional layer-equipped separator, and a lithium ion secondary battery were produced in the same way as in Example 1 and the same evaluations were made with the exception that in Example 1, the pH of the binder composition was changed to 9.7. The results are shown in Table 1.

[Table 1]

| | Example 1 | Example 2 | Example 3 | Example 4 | Example 5 | Example 6 | Example 7 | Example 8 | Example 9 | Example 10 | Example 11 | Example 12 | Example 13 | Comparative Example 1 | Comparative Example 2 | Comparative Example 3 |
|---|---|---|---|---|---|---|---|---|---|---|---|---|---|---|---|---|
| **Binder composition — Particulate polymer A — Chemical composition** | | | | | | | | | | | | | | | | |
| Aromatic vinyl monomer unit — Type | ST | ST | ST | ST | ST | ST | ST | ST | ST | ST | ST | ST | ST | ST | ST | ST |
| Aromatic vinyl monomer unit — Proportional content (mass%) | 65 | 65 | 65 | 65 | 65 | 65 | 65 | 25 | 98 | 25.0 | 39.5 | 49.5 | 65 | 65 | 65 | 65 |
| Cross-linkable monomer unit — Type | EDMA | EDMA | EDMA | EDMA | EDMA | EDMA | EDMA | EDMA | EDMA | EDMA | EDMA | EDMA | EDMA | EDMA | EDMA | EDMA |
| Cross-linkable monomer unit — Proportional content (mass%) | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| (Meth)acrylic acid ester monomer unit — Type | BA | BA | BA | BA | BA | BA | BA | BA | BA | BA | BA | BA | BA | BA | BA | BA |
| (Meth)acrylic acid ester monomer unit — Proportional content (mass%) | 24.5 | 24.5 | 24.5 | 24.5 | 24.5 | 24.5 | 24.5 | 64.5 | - | 64.5 | 50.0 | 40.0 | 24.5 | 24.5 | 24.5 | 24.5 |
| Epoxy group-containing unsaturated monomer unit — Type | GMA | GMA | GMA | GMA | GMA | GMA | GMA | GMA | GMA | GMA | GMA | GMA | GMA | GMA | GMA | GMA |
| Epoxy group-containing unsaturated monomer unit — Proportional content (mass%) | 10 | 10 | 10 | 10 | 10 | 10 | 10 | 10 | 1.5 | 10 | 10 | 10 | 10 | 10 | 10 | 10 |
| Volume-average particle diameter D50 (µm) | 4.2 | 4.2 | 4.2 | 4.2 | 4.2 | 4.2 | 0.8 | 4.2 | 4.2 | 4.5 | 4.5 | 4.5 | 4.5 | 4.2 | 4.2 | 4.2 |
| Amount (parts) | 80 | 80 | 80 | 80 | 80 | 80 | 80 | 80 | 80 | 80 | 80 | 80 | 80 | 80 | 80 | 80 |
| Degree of swelling in electrolyte solution (×) | 2.0 | 2.0 | 2.0 | 2.0 | 2.0 | 2.0 | 2.0 | 3.5 | 1.1 | 3.5 | 3 | 2.2 | 2 | 2.0 | 2.0 | 2.0 |
| Magnesium chloride (parts) | 10.0 | 10.0 | 10.0 | 10.0 | 10.0 | 10.0 | 8.0 | 10.0 | 10.0 | 10.0 | 10.0 | 10.0 | 10.0 | 10.0 | 10.0 | 10.0 |
| End point pH of acid washing | 5.5 | 5.5 | 6.0 | 6.5 | 5.5 | 5.5 | 5.5 | 5.5 | 5.5 | - | - | - | - | 6.5 | 5.5 | 5.5 |
| Acid washing time (hr) | 5 | 5 | 5 | 5 | 5 | 5 | 5 | 5 | 5 | - | - | - | - | 0.25 | 5 | 5 |
| **Binder composition — Particulate polymer B — Chemical composition** | | | | | | | | | | | | | | | | |
| (Meth)acrylic acid ester monomer unit — Type | BA | BA | BA | BA | BA | BA | BA | BA | BA | BA | BA | BA | BA | BA | BA | BA |
| (Meth)acrylic acid ester monomer unit — Proportional content (mass%) | 94 | 94 | 94 | 94 | 94 | 94 | 94 | 94 | 94 | 94 | 94 | 94 | 94 | 94 | 94 | 94 |
| Acidic group-containing monomer unit — Type | MAA | MAA | MAA | MAA | MAA | MAA | MAA | MAA | MAA | MAA | MAA | MAA | MAA | MAA | MAA | MAA |
| Acidic group-containing monomer unit — Proportional content (mass%) | 2 | 2 | 2 | 2 | 2 | 2 | 2 | 2 | 2 | 2 | 2 | 2 | 2 | 2 | 2 | 2 |
| Nitrile group-containing monomer unit — Type | AN | AN | AN | AN | AN | AN | AN | AN | AN | AN | AN | AN | AN | AN | AN | AN |
| Nitrile group-containing monomer unit — Proportional content (mass%) | 2 | 2 | 2 | 2 | 2 | 2 | 2 | 2 | 2 | 2 | 2 | 2 | 2 | 2 | 2 | 2 |
| Cross-linkable monomer unit — Type | AMA | AMA | AMA | AMA | AMA | AMA | AMA | AMA | AMA | AMA | AMA | AMA | AMA | AMA | AMA | AMA |
| Cross-linkable monomer unit — Proportional content (mass%) | 1 | 1 | 1 | 1 | 1 | 1 | 1 | 1 | 1 | 1 | 1 | 1 | 1 | 1 | 1 | 1 |
| Epoxy group-containing unsaturated monomer unit — Type | GMA | GMA | GMA | GMA | GMA | GMA | GMA | GMA | GMA | GMA | GMA | GMA | GMA | GMA | GMA | GMA |
| Epoxy group-containing unsaturated monomer unit — Proportional content (mass%) | 1 | 1 | 1 | 1 | 1 | 1 | 1 | 1 | 1 | 1 | 1 | 1 | 1 | 1 | 1 | 1 |
| Amount (parts) | 20 | 20 | 20 | 20 | 20 | 20 | 20 | 20 | 20 | 20 | 20 | 20 | 20 | 20 | 20 | 20 |
| Volume-average particle diameter D50 (µm) | 0.35 | 0.35 | 0.35 | 0.35 | 0.35 | 0.35 | 0.35 | 0.35 | 0.35 | 0.35 | 0.35 | 0.35 | 0.35 | 0.35 | 0.35 | 0.35 |
| Particulate polymer A:Particulate polymer B (mass ratio) | 80:20 | 80:20 | 80:20 | 80:20 | 80:20 | 80:20 | 80:20 | 80:20 | 80:20 | 80:20 | 80:20 | 80:20 | 80:20 | 80:20 | 80:20 | 80:20 |
| 86° Glossiness | 10.4 | 10.4 | 25.0 | 40.0 | 30.0 | 55.0 | 65.2 | 60.0 | 20.0 | 60.0 | 39.2 | 25.5 | 10.4 | 75.0 | 62.0 | 80.0 |
| 60° Glossiness | 3.9 | 3.9 | 4.0 | 5.5 | 4.3 | 5.0 | 5.5 | 2.0 | 1.5 | 2.0 | 2.6 | 3.1 | 3.9 | 2.0 | 6.0 | 2.0 |
| 86° Glossiness/60° Glossiness | 2.7 | 2.7 | 6.3 | 7.3 | 7.0 | 11.0 | 11.9 | 30.0 | 13.3 | 30.0 | 15.1 | 8.2 | 2.7 | 37.5 | 10.3 | 40.0 |
| pH | 8.0 | 8.0 | 8.0 | 8.0 | 7.6 | 8.8 | 8.8 | 8.0 | 8.0 | 8.0 | 9.9 | 9.9 | 9.9 | 8.0 | 7.0 | 9.7 |
| **Slurry composition — Inorganic particles** | | | | | | | | | | | | | | | | |
| Type | Alumina | Alumina | Alumina | Alumina | Alumina | Alumina | Alumina | Alumina | Alumina | Alumina | Alumina | Alumina | Alumina | Alumina | Alumina | Alumina |
| Volume-average particle diameter D50 (µm) | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 |
| Amount (parts) | 300 | 300 | 300 | 300 | 300 | 300 | 300 | 300 | 300 | 300 | 300 | 300 | 300 | 300 | 300 | 300 |
| Application target | Separator | Negative electrode | Separator | Separator | Separator | Separator | Separator | Separator | Separator | Separator | Separator | Separator | Separator | Separator | Separator | Separator |
| Mass per unit area (mg/cm²) | 2 | 1.5 | 2 | 2 | 2 | 2 | 1.2 | 2 | 2 | 2 | 2 | 2 | 2 | 2 | 2 | 2 |
| **Evaluation** | | | | | | | | | | | | | | | | |
| Dispersion stability | A | A | B | B | A | B | C | C | B | B | A | A | A | D | D | D |
| Dry adhesiveness | A | A | B | B | A | B | B | A | C | A | B | B | B | C | C | D |
| High-temperature storage characteristics | A | A | C | C | A | B | B | C | B | C | B | B | A | D | D | D |

In Table 1:

"ST" indicates styrene unit;

"EDMA" indicates ethylene glycol dimethacrylate unit;

"BA" indicates n-butyl acrylate unit;

"MMA" indicates methyl methacrylate unit;

"GMA" indicates glycidyl methacrylate unit;

"MAA" indicates methacrylic acid unit;

"AN" indicates acrylonitrile unit; and

"AMA" indicates allyl methacrylate unit.

It can be seen from the results shown in Table 1 that in Examples 1 to 13 in which the used binder composition yields a coating film having an 86° glossiness of not less than 1 and not more than 70 and a 60° glossiness of less than 6 when applied onto and dried on a separator substrate made of polyethylene to obtain a coating film, dispersion stability of the binder composition is excellent, and an obtained secondary battery displays excellent high-temperature storage characteristics.

INDUSTRIAL APPLICABILITY

According to the present disclosure, it is possible to provide a binder composition for a non-aqueous secondary battery functional layer that has excellent dispersion stability and is capable of forming a functional layer that can improve high-temperature storage characteristics of a secondary battery.

Moreover, according to the present disclosure, it is possible to provide a slurry composition for a non-aqueous secondary battery functional layer that is capable of forming a functional layer that can improve high-temperature storage characteristics of a secondary battery.

Furthermore, according to the present disclosure, it is possible to provide a separator for a non-aqueous secondary battery and an electrode for a non-aqueous secondary battery that can improve high-temperature storage characteristics of a secondary battery.

Also, according to the present disclosure, it is possible to provide a non-aqueous secondary battery that has excellent high-temperature storage characteristics.

**Claims**

1. A binder composition for a non-aqueous secondary battery functional layer comprising: a particulate polymer A; a particulate polymer B differing from the particulate polymer A; and a dispersion medium, wherein
a coating film obtained through application and drying of the binder composition for a non-aqueous secondary battery functional layer on a separator substrate made of polyethylene has an 86° glossiness of not less than 1 and not more than 70 and a 60° glossiness of less than 6.

2. The binder composition for a non-aqueous secondary battery functional layer according to claim 1, wherein a ratio of the 86° glossiness relative to the 60° glossiness of the coating film, expressed by 86° glossiness/60° glossiness, is not less than 1 and not more than 50.

3. The binder composition for a non-aqueous secondary battery functional layer according to claim 1, wherein

   the dispersion medium is water, and
   the binder composition for a non-aqueous secondary battery functional layer has a pH of higher than 7.5 and lower than 9.0.

4. The binder composition for a non-aqueous secondary battery functional layer according to claim 1, wherein a mass ratio of the particulate polymer A and the particulate polymer B, expressed by particulate polymer A:particulate polymer B, is not less than 50:50 and not more than 95:5.

5. The binder composition for a non-aqueous secondary battery functional layer according to claim 1, wherein the particulate polymer A has a volume-average particle diameter D50 of not less than 0.5 $\mu$m and not more than 10 $\mu$m.

6. The binder composition for a non-aqueous secondary battery functional layer according to claim 1, wherein the particulate polymer A has a degree of swelling in electrolyte solution of not less than ×1 and not more than ×5.

7. The binder composition for a non-aqueous secondary battery functional layer according to claim 1, wherein the particulate polymer A includes an aromatic vinyl monomer unit in a proportion of 25 mass% or more.

8. A slurry composition for a non-aqueous secondary battery functional layer comprising: the binder composition for a non-aqueous secondary battery functional layer according to claim 1; and inorganic particles.

9. The slurry composition for a non-aqueous secondary battery functional layer according to claim 8, wherein the inorganic particles have a volume-average particle diameter D50 of not less than 0.1 $\mu$m and not more than 1.0 $\mu$m.

10. A separator for a non-aqueous secondary battery comprising: a separator substrate; and a functional layer provided on at least one side of the separator substrate, wherein
the functional layer is obtained using the binder composition for a non-aqueous secondary battery functional layer according to any one of claims 1 to 7 or the slurry composition for a non-aqueous secondary battery functional layer according to claim 8 or 9.

11. An electrode for a non-aqueous secondary battery comprising: an electrode substrate; and a functional layer provided on at least one side of the electrode substrate, wherein
the functional layer is obtained using the binder composition for a non-aqueous secondary battery functional layer according to any one of claims 1 to 7 or the slurry composition for a non-aqueous secondary battery functional layer according to claim 8 or 9.

12. A non-aqueous secondary battery comprising a positive electrode, a negative electrode, a separator, and an electrolyte solution, wherein
the separator is the separator for a non-aqueous secondary battery according to claim 10.

13. A non-aqueous secondary battery comprising a positive electrode, a negative electrode, a separator, and an electrolyte solution, wherein
at least one of the positive electrode and the negative electrode is the electrode for a non-aqueous secondary battery according to claim 11.

## INTERNATIONAL SEARCH REPORT

| International application No. |
|---|
| **PCT/JP2024/009085** |

**A. CLASSIFICATION OF SUBJECT MATTER**

*H01M 50/443*(2021.01)i; *H01M 4/13*(2010.01)i; *H01M 4/139*(2010.01)i; *H01M 10/052*(2010.01)i; *H01M 10/0566*(2010.01)i; *H01M 50/403*(2021.01)i; *H01M 50/417*(2021.01)i; *H01M 50/434*(2021.01)i; *H01M 50/446*(2021.01)i; *H01M 50/451*(2021.01)i; *H01M 50/46*(2021.01)i; *H01M 50/489*(2021.01)i

FI: H01M50/443 B; H01M4/13; H01M4/139; H01M10/052; H01M10/0566; H01M50/403 D; H01M50/417; H01M50/434; H01M50/443 E; H01M50/443 M; H01M50/446; H01M50/451; H01M50/46; H01M50/489

According to International Patent Classification (IPC) or to both national classification and IPC

**B. FIELDS SEARCHED**

Minimum documentation searched (classification system followed by classification symbols)

H01M50/443; H01M4/13; H01M4/139; H01M10/052; H01M10/0566; H01M50/403; H01M50/417; H01M50/434; H01M50/446; H01M50/451; H01M50/46; H01M50/489

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-041603 A (ZEON CORPORATION) 02 March 2015 (2015-03-02) | 1-13 |
| A | JP 2018-056142 A (ZEON CORPORATION) 05 April 2018 (2018-04-05) | 1-13 |
| A | JP 2018-113151 A (HITACHI CHEMICAL COMPANY, LTD.) 19 July 2018 (2018-07-19) | 1-13 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2024/009085**

| Patent document cited in search report | | | Publication date (day/month/year) | Patent family member(s) | | | Publication date (day/month/year) |
|---|---|---|---|---|---|---|---|
| JP | 2015-041603 | A | 02 March 2015 | (Family: none) | | | |
| JP | 2018-056142 | A | 05 April 2018 | US | 2015/0311490 | A1 | |
| | | | | WO | 2014/081035 | A1 | |
| | | | | EP | 2924781 | A1 | |
| | | | | CN | 104769753 | A | |
| | | | | KR | 10-2015-0089000 | A | |
| JP | 2018-113151 | A | 19 July 2018 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022124126 A1
- JP 2013145763 A
- WO 2015129408 A1

**Non-patent literature cited in the description**

- 93 Investigation of Influence of Specimen Color on Glossiness. *T. IEE Japan*, vol. 113-C (11), 1013-1022